# EUROPEAN PATENT APPLICATION

(11) **EP 4 541 489 A1**
(43) Date of publication of application: **23.04.2025**
(21) Application number: 22946803.8
(22) Date of filing: 15.06.2022
(51) Int. Cl.: B22F 10/85, B29C 64/386, B29C 64/393, B33Y 50/00, B33Y 50/02

(54) **PROCESSING CONTROL INFORMATION GENERATION METHOD, PROCESSING METHOD, AND MODEL GENERATION METHOD**

(71) Applicant: NIKON CORPORATION, Tokyo 140-8601 (JP)
(72) Inventor: NAKAGAWA, Tomoya, Tokyo 140-8601 (JP)
(74) Representative: Hoffmann Eitle
(86) International application number: PCT/JP2022/023913
(87) International publication number: WO 2023/242983

(57) **Abstract**

A processing control information generation method includes: acquiring an object model that indicates a three-dimensional shape of an object; generating a deformation model, which indicates a target shape of the object after a processing, by deforming a reference model of the object based on the object model; generating a difference model that indicates a difference between the deformation model and the object model; and generating, based on the difference model, processing control information for performing an additive manufacturing on the object so that the three-dimensional shape of the object becomes the target shape.

## Description

### Technical Field

The present invention relates to a technical field of a processing control information generation method that generates processing control information for controlling a processing of an object, a processing method that processes the object by using the processing control information, and a model generation method that generates a model related to the object, for example.

### Background Art

A Patent literature 1 discloses one example of a processing apparatus that processes an object. One technical problem of this processing apparatus is to appropriately generate processing control information for controlling a processing of the object.

### Citation List

### Patent Literature

Patent Literature 1: US2018/0029298A1

### Summary of Invention

A first aspect provides a processing control information generation method including: acquiring an object model that indicates a three-dimensional shape of an object; generating a deformation model, which indicates a target shape of the object after a processing, by deforming a reference model of the object based on the object model; generating a difference model that indicates a difference between the deformation model and the object model; and generating, based on the difference model, processing control information for performing an additive manufacturing on the object so that the three-dimensional shape of the object becomes the target shape.

A second aspect provides a processing method that performs the additive manufacturing by using the processing control information generation method provided by the first aspect described above.

A third aspect provides a processing control information generation method including: acquiring an object model that indicates a three-dimensional shape of an object; generating a deformation model that indicates a target shape of the object after a processing and that is deformed based on the object model; generating a difference model that indicates a difference between the deformation model and the object model; and generating, based on the difference model, processing control information for performing an additive manufacturing on the object so that the three-dimensional shape of the object becomes the target shape.

A fourth aspect provides a processing control information generation method including: generating a deformation model, which indicates a target shape of the object after a processing, by deforming a reference model of an object; generating a difference model that is a part of the deformation model and that indicates a processing part necessary for making the three-dimensional shape of the object become the target shape; and generating, based on the difference model, processing control information for performing an additive manufacturing on the object.

A fifth aspect provides a processing control information generation method including: acquiring an object model that is generated by measuring a three-dimensional shape of an object; generating a deformation model that indicates a target shape of the object after a processing, by deforming a reference model of the object based on the object model; and generating, based on the object model and the deformation model, processing control information for performing an additive manufacturing on the object.

A sixth aspect provides a processing method that performs a processing by using the processing control information generation method provided by at least one of the first aspect to the fourth aspect described above.

A seventh aspect provides a model generation method including: acquiring an object information that indicates a three-dimensional shape of an object; generating a deformation model, which indicates a target shape of the object after a processing, by deforming a reference model of the object based on the object information; and generating a difference model that indicates a difference between the deformation model and the object model.

An eighth aspect provides a model generation method including: acquiring a measured result of measuring a three-dimensional shape of an object; generating a deformation model, which indicates a target shape of the object after a processing, by deforming a reference model of the object based on the measured result; and generating a difference model that indicates a difference between the deformation model and the object model.

An operation and another advantage of the present invention will be apparent from an example embodiment described below.

### Brief Description of Drawings

[FIG. 1] FIG. 1 is a block diagram that illustrates an entire configuration of a processing system in a present example embodiment.
[FIG. 2] FIG. 2 is a block diagram that illustrates a system configuration of a processing apparatus in the present example embodiment.
[FIG. 3] FIG. 3 is a cross-sectional view that illustrates a configuration of the processing apparatus in a present example embodiment.
[FIG. 4] FIG. 4 is a block diagram that illustrates a configuration of a measurement system.
[FIG. 5] FIG. 5 is a block diagram that illustrates a configuration of a control information generation apparatus.
[FIG. 6] Each of FIG. 6(a) to FIG 6(e) is a cross-sectional view that illustrates an aspect in which a certain area on a workpiece is irradiated with build light and a build material is supplied thereto.
[FIG. 7] Each of FIG. 7(a) to FIG. 7(c) is a cross-sectional view that illustrates a process for forming a three-dimensional structural object.
[FIG. 8] FIG. 8(a) schematically illustrates a reference model, and FIG. 8(b) schematically illustrates an object model.
[FIG. 9] FIG. 9(a) schematically illustrates the reference model, FIG. 9(b) schematically illustrates the object model, and FIG. 9(c) schematically illustrates a difference model that is generated based on the reference model illustrated in FIG. 9(a) and the object model illustrated in FIG. 9(b).
[FIG. 10] FIG. 10(a) schematically illustrates the reference model in a case where the workpiece is deformed due to a use of the workpiece, and FIG. 10(b) schematically illustrates the object model in a case where the workpiece is deformed due to the use of the workpiece.
[FIG. 11] FIG. 11(a) schematically illustrates the reference model in a case where the workpiece is deformed due to the use of the workpiece, FIG. 11(b) schematically illustrates the object model in a case where the workpiece is deformed due to the use of the workpiece, and FIG. 11(c) schematically illustrates the difference model that is generated based on the reference model illustrated in FIG. 11(a) and the object model illustrated in FIG. 11(b).
[FIG. 12] FIG. 12 is a flowchart that illustrates a flow of a control information generation operation in the present example embodiment.
[FIG. 13] FIG. 13 schematically illustrates the reference model that is not deformed and the reference model that is deformed.
[FIG. 14] FIG. 14 schematically illustrates the reference model that is not deformed and the reference model that is deformed.
[FIG. 15] FIG. 15(a) schematically illustrates the reference model that is not deformed, and FIG. 15(b) schematically illustrates the reference model that is deformed.
[FIG. 16] FIG. 16(a) schematically illustrates the reference model in a case where the workpiece is deformed due to the use of the workpiece, FIG. 16(b) schematically illustrates the object model in a case where the workpiece is deformed due to the use of the workpiece, and FIG. 16(c) schematically illustrates the difference model that is generated based on the reference model illustrated in FIG. 16(a) and the object model illustrated in FIG. 16(b).
[FIG. 17] FIG. 17 is a flowchart that illustrates a flow of one specific example of an operation for generating a deformation model by deforming the reference model at a step S4 in FIG. 12.
[FIG. 18] FIG. 18 schematically illustrates one example of an alignment of the reference model and the object model.
[FIG. 19] FIG. 19 schematically illustrates one example of the reference model in which each vertex is specified as one of a fixed vertex, a control vertex, and a dependent vertex.
[FIG. 20] FIG. 20 schematically illustrates the reference model that is not deformed and the reference model that is deformed.
[FIG. 21] FIG. 21 schematically illustrates the reference model that is not deformed and the reference model that is deformed.
[FIG. 22] FIG. 22 schematically illustrates the difference model.
[FIG. 23] FIG. 23 schematically illustrates the difference model.

### Description of Example embodiments

Next, with reference to drawings, an example embodiment of a processing control information generation method, a processing method, and a model generation method will be described. In the below-described description, the example embodiment of the processing control information generation method, the processing method, and the model generation method will be described by using a processing system SYS that is configured to process a workpiece W that is one example of an object.

### (1) Configuration of Processing System SYS

### (1-1) Entire Configuration of Processing System SYS

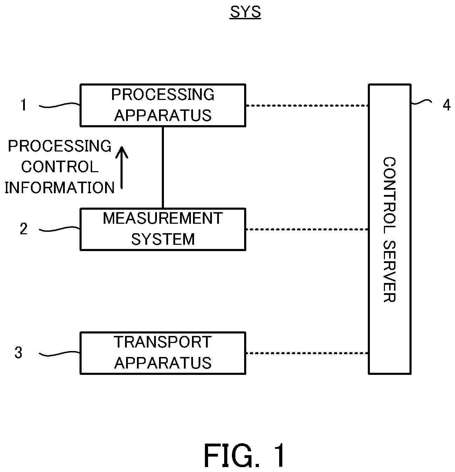

First, with reference to FIG. 1, an entire configuration of the processing system SYS will be described. FIG. 1 is a block diagram that illustrates the entire configuration of the processing system SYS.

As illustrated in FIG. 1, the processing system SYS includes a processing apparatus 1, a measurement system 2, and a transport apparatus 3. Incidentally, the processing system SYS includes the single processing apparatus 1 in an example illustrated in FIG. 1, however, it may include a plurality of processing apparatuses 1. The processing system SYS includes the single measurement system 2 in an example illustrated in FIG. 1, however, it may include a plurality of measurement systems 2. The processing system SYS includes the single transport apparatus 3, however, it may include a plurality of transport apparatuses 3. Incidentally, the processing system SYS may not include the transport apparatus 3. Incidentally, in a case where the processing system SYS is includes the plurality of processing apparatuses 1, the number of measurement systems 2 may be smaller than the number of processing apparatuses 1. For example, the processing system SYS may include two or more processing apparatuses 1 and one measurement system 2. In a case where the processing system SYS includes the plurality of measurement systems 2, the number of processing apparatuses 1 may be smaller than the number of measurement systems 2. For example, the processing system SYS may include one processing apparatus 1 and two or more measurement systems 2.

The processing apparatus 1 is configured to process the workpiece W. In the present example embodiment, an example in which the processing apparatus 1 is a processing apparatus that is configured to process the workpiece W by irradiating the workpiece W with processing light EL (namely, an energy beam in the form of light). However, the processing apparatus 1 may process the workpiece W without using the processing light EL.

The processing apparatus 1 is configured to perform an additive manufacturing on the workpiece W. Namely, the processing apparatus 1 is configured to build a build object on the workpiece W by performing the additive manufacturing on the workpiece W. In this case, the processing apparatus 1 may build the build object that is integrated with or separable from the workpiece W by performing the additive processing on the workpiece W. The build object that is built by the processing apparatus 1 may mean any object that is built by the processing apparatus 1. For example, the processing apparatus 1 may build a three-dimensional structural object ST (namely, a three-dimensional structure having a size in each of three-dimensional directions, a solid object, in other words, an object having a size in an X-axis direction, a Y-axis direction, and a Z-axis direction) as one example of the build object.

The processing apparatus 1 may perform the additive processing by using any additive manufacturing method (namely, a build method) that is capable of building the build object. At least one of a Laser Metal Deposition (LMD), a Powder Bed Fusion (PBF) such as a Selective Laser Sintering (SLS), a Binder Jetting (BJ), a Material Jetting, a Stereo Lithography, and a Laser Metal Fusion (LMF) is one example of the additive manufacturing method. Incidentally, the Laser Metal Deposition may be referred to as a Directed Energy Deposition (DED).

The workpiece W may be an item that needs to be repaired having a lost part. In this case, the processing apparatus 1 may perform a repair processing for repairing (in other words, restoring) the item that needs to be repaired by performing the additive manufacturing for building the build object for filling in the lost part. Namely, the additive manufacturing performed by the processing apparatus 1 may include the additive manufacturing for adding, to the workpiece W, the build object for filling in the lost part.

At least a part of a worn turbine is one example of the item that needs to be repaired having the lost part. For example, a turbine blade included in the turbine is one example of the item that needs to be repaired having the lost part. At least one of a turbine for a power generation and a turbine for an engine for an aircraft is one example of the turbine. In this case, the processing apparatus 1 may repair (in other words, restore) the worn turbine. A worn propeller-shaped component is another example of the item that needs to be repaired having the lost part. A body component of a vehicle such as a car, a motorcycle, an electric vehicle, and a train is another example of the item that needs to be repaired having the lost part. A component of an engine such as an engine for a car, an engine for a motorcycle, and an engine for an aerospace plane is another example of the item that needs to be repaired having the lost part. A component of a battery of an electric vehicle is another example of the item that needs to be repaired having the lost part. The processing apparatus may repair this item that needs to be repaired.

The workpiece W may be a base for building the three-dimensional structural object ST. In this case, the processing apparatus 1 may manufacture the three-dimensional structural object ST from scratch by performing the additive manufacturing for building the three-dimensional structural object ST on the workpiece W. As one example, the processing apparatus 1 may manufacture the turbine from scratch by performing the additive manufacturing for building the three-dimensional structural object ST corresponding to the turbine on the workpiece W.

The workpiece W may be an intermediate product manufactured in a process of building the three-dimensional structural object ST. In this case, the processing apparatus 1 may manufacture the three-dimensional structural object ST from the intermediate product by performing the additive manufacturing for completing the three-dimensional structural object ST on the workpiece W that is the intermediate product of the three-dimensional structural object ST. As one example, the processing apparatus 1 may manufacture a completed product of the turbine from the intermediate product of the turbine by performing the additive manufacturing for completing the turbine on the workpiece W that is the intermediate product of the turbine.

The processing apparatus 1 may be configured to perform a subtractive manufacturing on the workpiece W, in addition to or instead of performing the additive manufacturing. Namely, the processing apparatus 1 may be configured to perform the subtractive manufacturing for removing a part of the workpiece W. Incidentally, the processing apparatus 1 may perform the subtractive manufacturing on the build object built on the workpiece W by the processing apparatus 1, in addition to or instead of performing the subtractive manufacturing on the workpiece W.

The measurement system 2 measures the workpiece W before the processing apparatus 1 actually starts processing the workpiece W. In the present example embodiment, the measurement system 2 measures a three-dimensional shape of the workpiece W. Incidentally, when the three-dimensional shape of the workpiece W is determined, a position of the workpiece W in a three-dimensional space is also determined. Therefore, measuring the three-dimensional shape of the workpiece W may be considered to be substantially equivalent to measuring a position of the workpiece W.

Then, the measurement system 2 generates processing control information. The processing control information is control information that is used for controlling the processing apparatus 1 to process the workpiece W. For example, the processing control information may include a processing path information. The processing path information may indicate a target irradiation position that should be irradiated with the processing light EL to process the workpiece W. Specifically, the processing path information may indicate a target movement path that is a path of the target irradiation position that should be irradiated with the processing light EL to process the workpiece W. The target movement path may be referred to as a processing path or a tool path. In this case, the measurement system 2 may generate, as the processing control information, a G-code indicating the processing path or the tool path. The measurement system 2 may generate, as the processing control information, a file whose extension is gcode or gco. The processing control information generated by the measurement system 2 is transmitted from the measurement system 2 to the processing apparatus 1 through a non-illustrated communication network.

The processing apparatus 1 receives (namely, acquires) the processing control information transmitted from the measurement system 2. The processing apparatus 1 that has received the processing control information processes the workpiece W based on the received processing control information. Therefore, the workpiece W is transported from the measurement system 2 to the processing apparatus 1 after the measurement system 2 measures the three-dimensional shapes of the workpiece W. Specifically, the workpiece W is detached from the measurement system 2, and the detached workpiece W is transported to the processing apparatus 1. For example, the workpiece W may be transported from the measurement system 2 to the processing apparatus 1 by the transport apparatus 3. For example, the workpiece W may be transported from the measurement system 2 to the processing apparatus 1 by a user of the processing system SYS. The workpiece W transported to the processing apparatus 1 is set to (in other words, placed in or attached to) the processing apparatus 1. As a result, the processing apparatus 1 is able to process the workpiece W.

Incidentally, in the example illustrated in FIG. 1, the processing system SYS includes the processing apparatus 1 and the measurement system 2 that are separate apparatuses, respectively. However, the processing system SYS may include an apparatus in which the processing apparatus 1 and the measurement system 2 are integrated. Namely, the processing apparatus 1 and the measurement system 2 may be integrated.

The processing system SYS may further include a control server 4. However, the processing system SYS may not include the control server 4.

The control server 4 may control an operation of the entire processing system SYS. For example, the control server 4 may control an operation of the processing apparatus 1. For example, the control server 4 may control an operation of the measurement system 2. For example, the control server 4 may control an operation of the transport apparatus 3.

The control server 4 may serve as a cloud server. In this case, the control server 4 may be configured to communicate with at least one of the processing apparatus 1, the measurement system 2, and the transport apparatus 3 through a communication network including Internet. Alternatively, the control server 4 may serve as an edge server. In this case, the control server 4 may be configured to communicate with at least one of the processing apparatus 1, the measurement system 2, and the transport apparatus 3 through a communication network including an intranet or local area network.

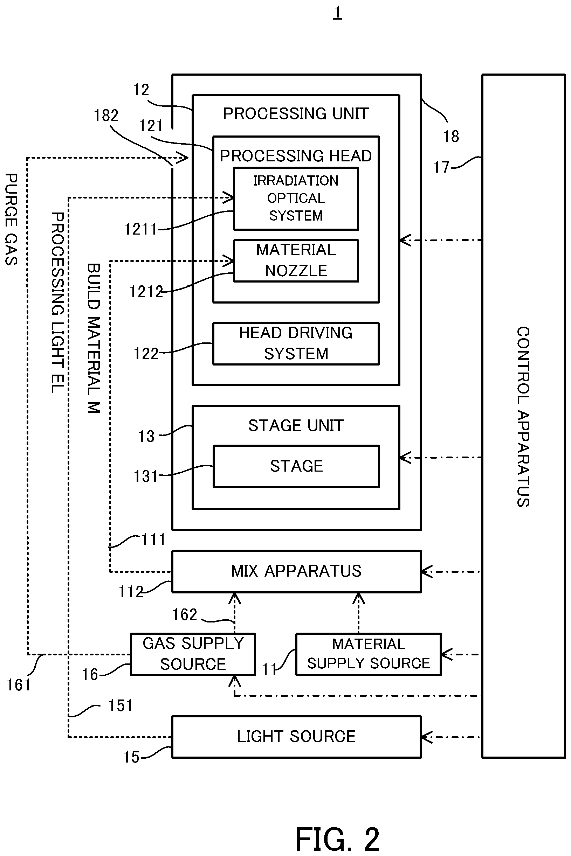

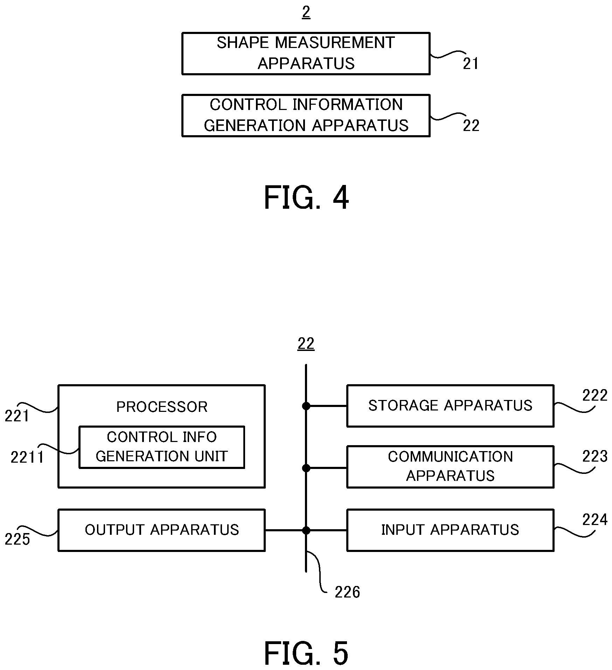

The processing system SYS may include a first computer that controls the processing apparatus 1 as a part of the processing apparatus 1, in addition to or instead of the control server 4 that controls the processing apparatus 1. Namely, the processing apparatus 1 may include the first computer. The first computer may be a laptop computer or any other type of computer. The first computer may serve as a below-described control apparatus 17 (see FIG. 2). The processing system SYS may include a second computer that controls the measurement system 2 as a part of the measurement system 2, in addition to or instead of the control server 4 that controls the measurement system 2. Namely, the measurement system 2 may include the second computer. The second computer may be a laptop computer or any other type of computer. The second computer may serve as a below-described control information generation apparatus 22 (see FIG. 4). The processing system SYS may include a third computer that controls the transport apparatus 3 as a part of the transport apparatus 3, in addition to or instead of the control server 4 that controls the transport apparatus 3. Namely, the transport apparatus 3 may include the third computer. The third computer may be a laptop computer or any other type of computer.

### (1-2) Configuration of Processing Apparatus 1

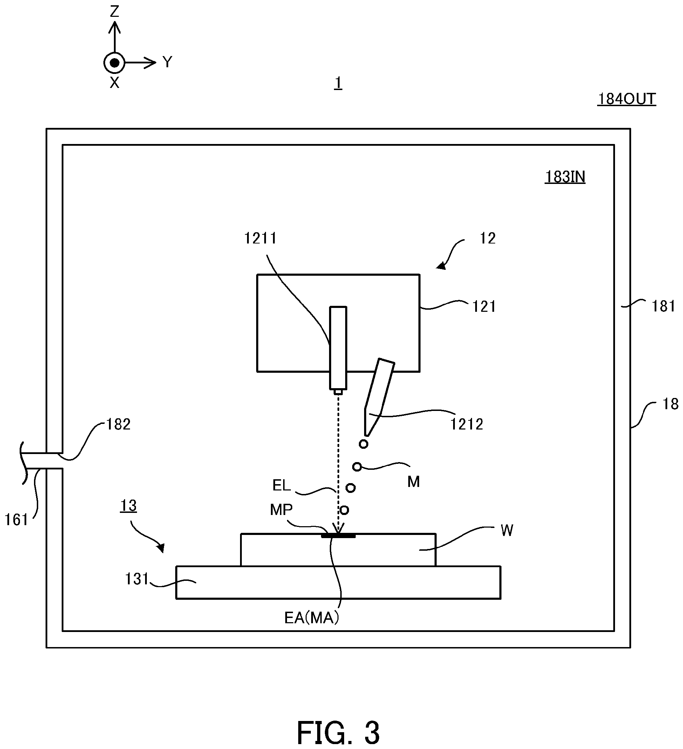

Next, with reference to FIG. 2 and FIG. 3, a configuration of the processing apparatus 1 will be described. FIG. 2 is a block diagram that illustrates a system configuration of the processing apparatus 1. FIG. 3 is a cross-sectional view that illustrates the configuration of the processing apparatus 1.

Incidentally, in the below described description, a positional relationship of various components that constitute the processing apparatus 1 will be described by using an XYZ rectangular coordinate system that is defined by an X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

Moreover, in the below-described description, the configuration of the processing apparatus 1 that performs the additive manufacturing will be described as one example of the configuration of the processing apparatus 1 for convenience of description. Especially, in the below-described description, the configuration of the processing apparatus 1 that performs the additive manufacturing by using the Laser Metal Deposition will be described as one example of the configuration of the processing apparatus 1.

The processing apparatus 1, which performs the additive manufacturing by using the Laser Metal Deposition, performs the additive manufacturing by processing a build material M by using the processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build material M is powder-like or grain-like material. Namely, the build material M is powdery material. However, the build material M may not be the powdery material. For example, at least one of a wired-like build material and a gas-like build material may be used as the build material M.

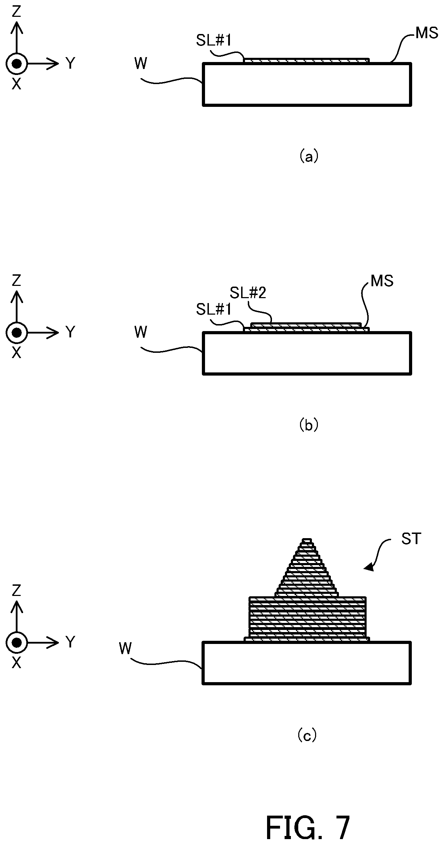

The processing apparatus 1, which performs the additive manufacturing by using the Laser Metal Deposition, builds the three-dimensional structural object ST in which a plurality of structural layers SL (see FIG. 7 below) are stacked by forming the plurality of structural layers SL in sequence. In this case, the processing apparatus 1 first sets a surface of the workpiece W to be a build surface MS on which the build object is actually built, and builds a first structural layer SL on the build surface MS. Then, the processing apparatus 1 sets a surface of the first structural layer SL to be a new build surface MS, and builds a second structural layer SL on the build surface MS. Then, the processing apparatus 1 repeats the same operation to build the three-dimensional structural object ST in which the plurality of structural layers SL are stacked.

In order to perform the additive manufacturing, the processing apparatus 1 includes a material supply source 11, a processing unit 12, a stage unit 13, a light source 15, a gas supply source 16, and a control apparatus 17, as illustrated in FIG. 2 to FIG. 3. The processing unit 12 and the stage unit 13 may be contained in a chamber space 183IN in a housing 18. Incidentally, at least one of the processing unit 12 and the stage unit 13 may not be contained in the chamber space 183IN in a housing 18.

The material supply source 11 supplies the build material M to the processing unit 12. The material supply source 11 supplies, to the processing unit 12, the build material M the amount of which is necessary for performing the additive manufacturing per unit time by supplying the build material M the amount of which is based on the necessary amount.

The processing unit 12 builds the build object by processing the build material M supplied from the material supply source 11. In order to build the build object, the processing unit 12 include a processing head 121 and a head driving system 122. Furthermore, the processing head 121 includes an irradiation optical system 1211 and a material nozzle 1212. Incidentally, in the example illustrated in FIG. 2 to FIG. 3, the processing head 121 includes a single irradiation optical system 1211, but the processing head 121 may include a plurality of irradiation optical systems 1211. Moreover, in the example illustrated in FIG. 2 to FIG. 3, the processing head 121 includes a single material nozzle 1212, but the processing head 121 may include a plurality of material nozzles 1212.

The irradiation optical system 1211 is an optical system (for example, a condensing optical system) for emitting the processing light EL. Specifically, the irradiation optical system 1211 is optically connected to the light source 15 that generates the processing light EL through a light transmitting member 151 such as an optical fiber and a light pipe. The irradiation optical system 1211 emits the processing light EL transmitted from the light source 15 through the light transmitting member 151. The irradiation optical system 1211 emits the processing light EL in a downward direction (namely, toward a -Z side) from the irradiation optical system 1211. The stage 131 is positioned below the irradiation optical system 1211. In a case where the workpiece W is placed on the stage 131, the irradiation optical system 1211 irradiates the workpiece W with the emitted processing light EL. In this case, the irradiation optical system 1211 irradiates the workpiece W with the emitted processing light EL from a position above the workpiece W. Specifically, the irradiation optical system 1211 is configured to irradiate a target irradiation area EA, which is set on the workpiece W or near the workpiece W as an area that is irradiated with the processing light EL (typically, in which the light is condensed), with the processing light EL. Furthermore, a state of the irradiation optical system 1211 is switchable between a state where the target irradiation area EA is irradiated with the processing light EL and a state where the target irradiation area EA is not irradiated with the processing light EL under the control of the control apparatus 17.

The material nozzle 1212 supplies (for example, injects, jets, blows out or sprays) the build material M. The material nozzle 1212 is physically connected to the material supply source 11, which is a supply source of the build material M, through a supply pipe 111 and a mix apparatus 112. The material nozzle 1212 supplies the build material M supplied from the material supply source 11 through the supply pipe 111 and the mix apparatus 112. The material nozzle 1212 may pressure-feed the build material M supplied from the material supply source 11 through the supply pipe 111. Namely, the build material M from the material supply source 11 and gas for feeding (namely, pressure-feed gas, and inert gas such as Nitrogen or Argon, for example) may be mixed by the mix apparatus 112 and then pressure-fed to the material nozzle 1212 through the supply pipe 111. As a result, the material nozzle 1212 supplies the build material M together with the gas for feeding. Purge gas supplied from the gas supply source 16 is used as the gas for feeding, for example. However, gas supplied from a gas supply source that is different from the gas supply source 16 may be used as the gas for feeding. The material nozzle 1212 supplies the build material M in a downward direction (namely, toward the -Z side) from the material nozzle 1212. The stage 131 is positioned below the material nozzle 1212. In a case where the workpiece W is placed on the stage 131, the material nozzle 1212 supplies the build material M toward the workpiece W or a vicinity of the workpiece W.

In the present example embodiment, the material nozzle 1212 supplies the build material M to an irradiation position of the processing light EL (namely, the target irradiation area EA that is irradiated with the processing light EL from the irradiation optical system 1211). Therefore, the material nozzle 1212 and the irradiation optical system 1211 are aligned so that a target supply area MA, which is set on the workpiece W or near the workpiece W as an area to which the material nozzle 1212 supplies the build material M, coincides with (alternatively, overlaps at least partially with) the target irradiation area EA. In this case, the build material M supplied from the material nozzle 1212 is irradiated with the processing light EL emitted from the irradiation optical system 1211. As a result, the build material M is molten. Namely, a melt pool MP including the molten build material M is formed on the workpiece W.

Note that the material nozzle 1212 may supply the build material M to the melt pool MP that is formed by the processing light EL emitted from the irradiation optical system 1211. For example, the processing apparatus 1 may melt the build material M by the irradiation optical system 1211 before the build material M from the material nozzle 1212 reaches the workpiece W and may make the molten build material M adhere to the workpiece W.

The head driving system 122 moves the processing head 121 under the control of the control apparatus 17. Namely, the head driving system 122 moves the irradiation optical system 1211 and the material nozzle 1212 under the control of the control apparatus 17. The head driving system 122 moves the processing head 121 along at least one of the X-axis, the Y-axis, the Z-axis, the θX direction, the θY direction, and the θZ direction, for example. When the head driving system 122 moves the processing head 121, a relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The stage unit 13 includes the stage 131 and a stage driving system 132.

The workpiece W is placed on the stage 131. The stage 131 is configured to support the workpiece W placed on the stage 131. The stage 131 may be configured to hold the workpiece W placed on the stage 131. In this case, the stage 131 may include at least one of a mechanical chuck, an electrostatic chuck, and a vacuum suction chuck to hold the workpiece W. Alternatively, the stage 131 may not be configured to hold the workpiece W placed on the stage 131. In this case, the workpiece W may be placed on the stage 131 without clamp. Moreover, the workpiece W may be attached to a holding tool such as a jig, and the holding tool to which the workpiece W has been attached may be placed on the stage 31. Incidentally, the workpiece W may not be placed on the stage 131, and may be placed on a floor surface, for example.

The stage driving system 132 moves the stage 131 under the control of the control apparatus 17. For example, the stage driving system 132 moves the stage 131 along at least one of the X-axis, the Y-axis, the Z-axis, the θX direction, the θY direction and the θZ direction. When the stage driving system 132 moves the stage 131, the relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The light source 15 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may include continuous light (CW: Continuous Wave). The processing light EL may be a laser light. In this case, the light source 15 may include a semiconductor laser such as a laser light source (for example, a Laser Diode (LD)). The laser light source may include at least one of a fiber laser, a CO₂ laser, a YAG laser, an Excimer laser, and the like. However, the processing light EL may not be the laser light. The light source 15 may include any light source (for example, at least one of a LED (Light Emitting Diode), a discharge lamp and the like).

The gas supply source 16 is a supply source of the purge gas for purging the chamber space 183IN in the housing 18. The purge gas includes inert gas. At least one of Nitrogen gas and Argon gas is one example of the inert gas. The gas supply source 16 is connected to the chamber space 183IN through a supply port 182 formed in a wall member 181 of the housing 18 and a supply pipe 161 connecting the gas supply source 16 to the supply port 182. The gas supply source 16 supplies the purge gas to the chamber space 183IN through the supply pipe 161 and the supply port 182. As a result, the chamber space 183IN becomes a space purged by the purge gas. The purge gas supplied to the chamber space 183IN may be discharged from a non-illustrated outlet port formed in the wall member 181. Note that the gas supply source 16 may be a tank that stores the inert gas. In a case where the purge gas is the Nitrogen gas, the gas supply source 16 may be a Nitrogen gas generation apparatus that generates the Nitrogen gas by using air as material.

In a case where the material nozzle 1212 supplies the build material M together with the purge gas as described above, the gas supply source 16 may supply the purge gas to the mix apparatus 112 to which the build material M is supplied from the material supply source 11. Specifically, the gas supply source 16 may be connected to the mix apparatus 112 through a supply pipe 162 that connects the gas supply source 16 and the mix apparatus 112. As a result, the gas supply source 16 supplies the purge gas to the mix apparatus 112 through the supply pipe 162. In this case, the build material M from the material supply source 11 may be supplied (specifically, pressure-fed) to the material nozzle 1212 through the supply pipe 111 by the purge gas supplied from the gas supply source 16 through the supply pipe 162. Namely, the gas supply source 16 may be connected to the material nozzle 1212 through the supply pipe 162, the mix apparatus 112 and the supply pipe 111. In this case, the material nozzle 1212 supplies the build material M together with the purge gas for pressure-feeding the build material M.

The control apparatus 17 controls an operation of the processing apparatus 1. For example, the control apparatus 17 may control the processing unit 12 (for example, at least one of the processing head 121 and the head driving system 122) of the processing apparatus 1 to process the workpiece W. For example, the control apparatus 17 may control the stage unit 13 (for example, stage driving system 132) of the processing apparatus 1 to process workpiece W.

The control apparatus 17 may include a processor and a storage apparatus. The processor may include at least one of a CPU (Central Processing unit) and a GPU (Graphic Processing unit), for example. The storage apparatus may include a memory. The control apparatus 17 serves as an apparatus for controlling the operation of the processing apparatus 1 by means of the processor executing a computer program. The computer program is a computer program that allows the processor to execute (namely, to perform) a below-described operation that should be executed by the control apparatus 17. Namely, the computer program is a computer program that allows the control apparatus 17 to function so as to make the processing apparatus 1 execute the below-described operation. The computer program executed by the processor may be recorded in the storage apparatus (namely, a recording medium) of the control apparatus 17, or may be recorded in any recording medium (for example, a hard disk or a semiconductor memory) that is built in the control apparatus 17 or that is attachable to the control apparatus 17. Alternatively, the processor may download the computer program that should be executed from an apparatus positioned at an outside of the control apparatus 17 through a network interface.

The control apparatus 17 may control an emitting aspect of the processing light EL by the irradiation optical system 1211. The emitting aspect may include at least one of an intensity of the processing light EL and an emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 17 may control a movement aspect of the processing head 121 by the head driving system 122. The control apparatus 17 may control a movement aspect of the stage 131 by the stage driving system 132. The movement aspect may include at least one of a movement distance, a movement speed, a movement direction, and a movement timing (a movement period), for example. Moreover, the control apparatus 17 may control a supply aspect of the build material M by the material nozzle 1212. The supply aspect may include at least one of a supplied amount (especially, a supplied amount per unit time) and a supply timing (a supply period).

The control apparatus 17 may not be positioned in the processing apparatus 1. For example, the control apparatus 17 may be positioned at the outside of the processing apparatus 1 as a server or the like. In this case, the control apparatus 17 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 17 and the processing apparatus 1 may be configured to transmit and receive various information through the network. Moreover, the control apparatus 17 may be configured to transmit information such as a command and a control parameter to the processing apparatus 1 through the network. The processing apparatus 1 may include a reception apparatus that is configured to receive the information such as the command and the control parameter from the control apparatus 17 through the network. The processing apparatus 1 may include a transmission apparatus that is configured to transmit the information such as the command and the control parameter to the control apparatus 17 through the network (namely, an output apparatus that is configured to output information to the control apparatus 17). Alternatively, a first control apparatus that is configured to perform a part of the arithmetic processing performed by the control apparatus 17 may be positioned in the processing apparatus 1 and a second control apparatus that is configured to perform another part of the arithmetic processing performed by the control apparatus 17 may be positioned at the outside of the processing apparatus 1.

An arithmetic model that is buildable by machine learning may be implemented in the control apparatus 17 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 17 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control apparatus 17. Moreover, the arithmetic model implemented in the control apparatus 17 may be updated by online machine learning on the control apparatus 17. Alternatively, the control apparatus 17 may control the operation of the processing apparatus 1 by using the arithmetic model implemented in an apparatus that is positioned at an outside of the control apparatus 17 (namely, an apparatus that is positioned at an outside of the processing apparatus 1), in addition to or instead of the arithmetic model implemented on the control apparatus 17.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 17. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control apparatus 17 by means of the control apparatus 17 (namely, a computer) executing the computer program, may be realized by a hardware such as a predetermined gate array (a FPGA, an ASIC) of the control apparatus 17, or may be realized in a form in which the logical process block and a partial hardware module that realizes a partial element of the hardware are combined.

### (1-3) Configuration of Measurement System 2

Next, with reference to FIG. 4, a configuration of the measurement system 2 will be described. FIG. 4 is a block diagram that illustrates the configuration of the measurement system 2. As illustrated in FIG. 4, the measurement system 2 includes a shape measurement apparatus 21 and a control information generation apparatus 22.

The shape measurement apparatus 21 is configured to measure a three-dimensional shape of a measurement target object. In the present example embodiment, the measurement system 2 measures the workpiece W before the processing apparatus 1 actually starts processing the workpiece W, as described above. Therefore, the measurement target object of the shape measurement apparatus 21 may include the workpiece W.

The shape measurement apparatus 21 may have any configuration as long as it is configured to measure the three-dimensional shape of the measurement target object. For example, the shape measurement apparatus 21 may measure the three-dimensional shape of the measurement target object by using a pattern projection method or a light section method that projects a light pattern on a surface of the measurement target object by irradiating the surface with measurement light and measures a shape of the projected pattern. For example, the shape measurement apparatus 21 may measure the three-dimensional shape of the measurement target object by using a time of flight method that performs an operation, which emits measurement light to the surface of the measurement target object, calculates a time until the emitted measurement light returns from the measurement target object to the shape measurement apparatus 21, and measures a distance to the measurement target object based on the time, at plurality of positions on the measurement target object. For example, the shape measurement apparatus 21 may measure the three-dimensional shape of the measurement target object by using at least one of a moiré topography method (specifically, a grid irradiation method or a grid projection method), a holography interference method, an auto collimation method, a stereo method, an astigmatism method, a critical angle method, and a knife edge method.

Incidentally, the shape measurement apparatus 21 is not limited to an apparatus that measures the three-dimensional shape of the measurement target object contained in its housing. For example, the shape measurement apparatus 21 may be attached to a robot arm so as to be movable around the measurement target object.

The control information generation apparatus 22 generates processing control information. FIG. 5 illustrates one example of a configuration of the control information generation apparatus 22 that is configured to generate the processing control information. As illustrated in FIG. 5, the control information generation apparatus 22 includes a processor 221, a storage apparatus 222, and a communication apparatus 223. Furthermore, the control information generation apparatus 22 may include an input apparatus 224 and an output apparatus 225. However, the control information generation apparatus 22 may not include at least one of the input apparatus 224 and the output apparatus 225. The processor 221, the storage apparatus 222, the communication apparatus 223, the input apparatus 224, and the output apparatus 225 may be connected through a data bus 326.

The processor 221 may include at least one of a CPU (Central Processing unit) and a GPU (Graphic Processing unit), for example. The processor 221 read a computer program. For example, the processor 221 may read the computer program recorded in the storage apparatus 222. For example, the processor 221 may read the computer program recorded in a non-transitory computer-readable recording medium by using a non-illustrated recording medium reading apparatus. The processor 221 may acquire (namely, download or read) the computer program from a non-illustrated apparatus that is positioned at an outside of the control information generation apparatus 22 through the communication apparatus 223. Namely, the processor 221 may acquire (namely, download or read) the computer program recorded in a storage apparatus of the non-illustrated apparatus that is positioned at an outside of the control information generation apparatus 22 through the communication apparatus 223. The processor 221 executes the read computer program. As a result, a logical functional block for performing an operation that should be performed by the control information generation apparatus 22 (for example, an operation for generating the processing control information) is implemented in the processor 221. Namely, the processor 221 is configured to serve as a controller for implementing the logical functional block for performing the operation that should be performed by the control information generation apparatus 22. In this case, any apparatus (typically, a computer) that executes the computer program may serve as the control information generation apparatus 22.

FIG. 5 illustrates one example of the logical functional block implemented in the processor 221. As illustrated in FIG. 5, a control information generation unit 2211 is implemented in the processor 221. The control information generation unit 2211 generates the processing control information. Incidentally, an operation for generating the processing control information will be described in detail later.

An arithmetic model that is buildable by machine learning may be implemented in the processor 221 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The processor 221 may generate the processing control information by using the arithmetic model. Note that the arithmetic model that has been built by off-line machine learning using training data may be implemented in the processor 221. Moreover, the arithmetic model implemented in the processor 221 may be updated by online machine learning on the processor 221. Alternatively, the processor 221 may control the operation of the processing apparatus 1 by using the arithmetic model implemented in an apparatus that is positioned at an outside of the processor 221 (namely, an apparatus that is positioned at an outside of the control information generation apparatus 22), in addition to or instead of the arithmetic model implemented on the processor 221.

The storage apparatus 222 is configured to store desired data. For example, the storage apparatus 222 may temporarily store the computer program that is executed by the processor 221. The storage apparatus 222 may temporarily store data temporarily used by the processor 221 when the processor 221 executes the computer program. The storage apparatus 222 may store data stored for a long term by the control information generation apparatus 22. Incidentally, the storage apparatus 222 may include at least one of a RAM (Random Access Memory), a ROM (Read Only Memory), a hard disk apparatus, a magneto-optical disc, a SSD (Solid State Drive), and a disk array apparatus. Namely, the storage apparatus 222 may include a non-transitory recording medium.

The communication apparatus 223 is configured to communicate with the processing apparatus 1 through a non-illustrated communication network. In the present example embodiment, the communication apparatus 223 is configured to transmit the processing control information generated by the control information generation apparatus 22 to the processing apparatus 1.

The input apparatus 224 is an apparatus that receives an input of information from an outside of the control information generation apparatus 22 to the control information generation apparatus 22. For example, the input apparatus 224 may include an operating apparatus (for example, at least one of a keyboard, a mouse, and a touch panel) that is operable by a user. For example, the input apparatus 224 may include a reading apparatus that is configured to read information recorded as data on a recording medium that is attachable to the control information generation apparatus 22. For example, the input apparatus 224 may receive the input of the information from a robot that is positioned at an outside of the control information generation apparatus 22. For example, the input apparatus 224 may receive the input of the information from a computer that is positioned at an outside of the control information generation apparatus 22. a reading apparatus that is configured to read information recorded as data on a recording medium that is attachable to

The output apparatus 225 is an apparatus that outputs information to the outside of the control information generation apparatus 22. For example, the output apparatus 225 may output the information as an image. Namely, the output apparatus 225 may include a display apparatus (a so-called display) that is configured to display an image indicating the information that should be output. For example, the output apparatus 225 may output the information as audio. Namely, the output apparatus 225 may include an audio apparatus (so-called a speaker) that is configured output the audio. For example, the output apparatus 225 may output the information on a paper. Namely, the output apparatus 225 may include a printing apparatus (so-called a printer) that is configured to print desired information on the paper.

The output apparatus 225 may be attached to a robot. In this case, the robot to which the output apparatus 225 is attached may output the information to the outside of the control information generation apparatus 22. For example, the robot to which the output apparatus 225 is attached may output the information as the image.

### (2) Operation of Processing System SYS

Next, an operation performed by the processing system SYS will be described. In the present example embodiment, the processing system SYS may perform a processing operation for processing the workpiece W by mainly using the processing apparatus 1. Furthermore, the processing system SYS may perform a control information generation operation for generating the processing control information by mainly using the measurement system 2. Therefore, in the below-described description, the processing operation and the control information generation operation will be described in sequence.

### (2-1) Processing Operation

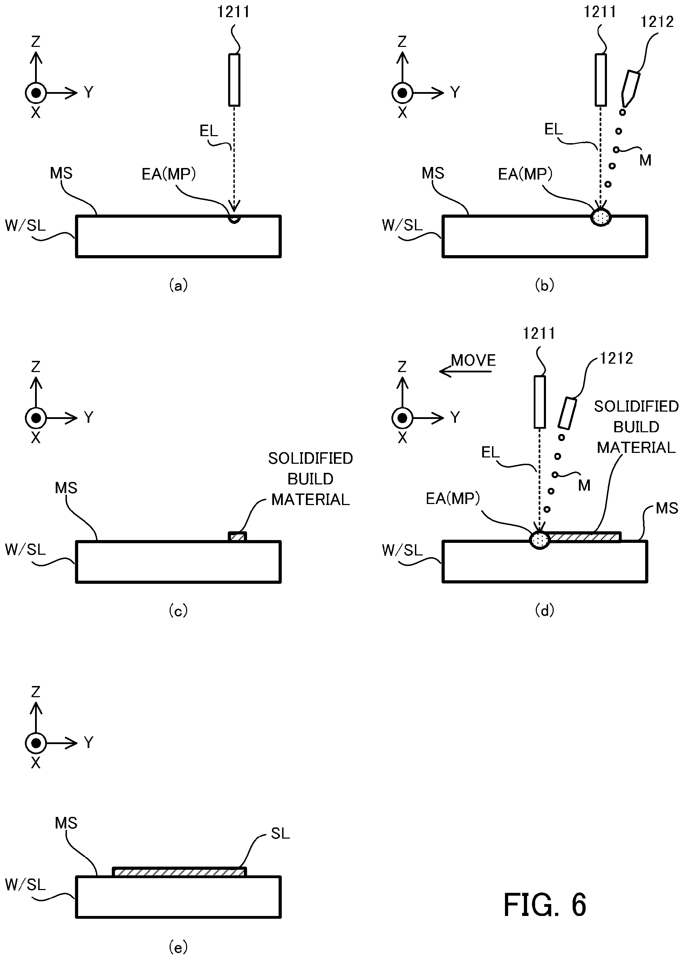

First, with reference to FIG. 6 to FIG. 7, the processing operation will be described. Especially, an additive manufacturing operation performed by the processing apparatus 1 will be described as one example of the processing operation. As described above, the processing apparatus 1 builds the three-dimensional structural object ST by using the Laser Metal Deposition. Therefore, the processing apparatus 1 may build the three-dimensional structural object ST by performing an existing additive manufacturing operation based on the Laser Metal Deposition. In the below-described description, one example of the processing operation of building the three-dimensional structural object ST by using the Laser Metal Deposition will be briefly described.

The processing system SYS sequentially builds a plurality of layered partial structural objects (it is referred to as the "structural layer" in the below described description) SL that are arranged along the Z-axis direction in order to build the three-dimensional structural object ST, for example. For example, the processing system SYS builds, one by one in sequence, the plurality of structural layers SL that are generated by slicing the three-dimensional structural object ST along the Z-axis direction. As a result, the three-dimensional structural object ST that is a layered structural body in which the plurality of structural layers SL are stacked is built. Next, a flow of an operation for building the three-dimensional structural object ST by building the plurality of structural layers SL one by one in sequence will be described.

First, with reference to FIG. 6(a) to FIG. 6(e), an operation for building each structural layer SL will be described. The processing apparatus 1 moves at least one of the processing head 121 and the stage 131 so that the target irradiation area EA is set at a desired area on the build surface MS that corresponds to a surface of the workpiece W or a surface of the built structural layer SL, under the control of the control apparatus 17. Then, the processing system SYS emits the processing light EL from the irradiation optical system 1211 to the target irradiation area EA. In this case, a condensed plane on which the processing light EL is condensed in the Z-axis direction may be positioned on the build surface MS. Alternatively, the condensed position may be away from the build surface MS. As a result, as illustrated in FIG. 6(a), the melt pool (namely, a pool of a metal molten by the processing light EL) MP is formed on the build surface MS that is irradiated with the processing light EL. Moreover, the processing system SYS supplies the build material M from the material nozzle 1212 under the control of the control apparatus 17. As a result, the build material M is supplied to the melt pool MP. The build material M supplied to the melt pool MP are molten by the processing light EL with which the melt pool MP is irradiated. Alternatively, the build material M supplied from the material nozzle 1212 may be molten by the processing light EL before reaching the melt pool MP, and the molten build material M may be supplied to the melt pool MP. Then, when the melt pool MP is no longer irradiated with the processing light EL due to the movement of at least one of the processing head 121 and the stage 131, the build material M molten in the melt pool MP is cooled and solidified (namely, coagulated). As a result, as illustrated in FIG. 6(c), the build object including the solidified build material M is deposited on the build surface MS.

The processing apparatus 1 repeats a series of build process including the formation of the melt pool MP by the irradiation of the processing light EL, the supply of the build material M to the melt pool MP, the melting of the supplied build material M and the solidification of the molten build material M while relatively moving the processing head 121 relative to the build surface MS along at least one of the X-axis direction and the Y-axis direction, as illustrated in FIG. 6(d). In this case, the processing apparatus 1 irradiates an area in which the build object should be built on the build surface MS with the processing light EL, but does not irradiate an area in which the build object should not be built on the build surface MS with the processing light EL. Namely, the processing apparatus 1 irradiates the build surface MS with the processing light EL at a timing based on an aspect of a distribution of the area in which the build object should be built, while moving the target irradiation area EA along a predetermined movement path on the build surface MS.

The movement path of the target irradiation area EA on the build surface MS may be referred to as a processing path (in other words, a tool path). The above-described processing control information includes information related to this processing path as processing path information. Therefore, the control information generation apparatus 22 may generate the processing control information including the processing path information. The processing apparatus 1 irradiates the build surface MS with the processing light EL at the timing based on the aspect of the distribution of the area in which the build object should be built, while moving the target irradiation area EA along the predetermined movement path on the build surface MS based on the processing control information.

As a result, the melt pool MP also moves on the build surface MS along a movement path based on the movement path of the target irradiation area EA. Specifically, the melt pool MP is formed in sequence at a part that is irradiated with the processing light EL in the area along the movement path of the target irradiation area EA on the build surface MS. As a result, as illustrated in FIG. 6(e), the structural layer SL corresponding to the build object that is an aggregation of the build material M, which is solidified after being molten, is built on the build surface MS. Namely, the structural layer SL corresponding to an aggregation of the build object built in a pattern based on the movement path of the melt pool MP on the build surface MS (namely, the structural layer SL having a shape based on the movement path of the melt pool MP in a planar view) is built. Incidentally, when the target irradiation area EA is set at the area in which the build object should not be built, the processing apparatus 1 may irradiate the target irradiation area EA with the processing light EL and stop the supply of the build material M. Moreover, when the target irradiation area EA is set at the area in which the build object should not be built, the processing apparatus 1 may supply the build material M to the target irradiation area EA and irradiate the target irradiation area EA with the processing light EL having an intensity by which the melt pool MP is not formed.

The processing apparatus 1 repeats the operation for forming the structural layer SL based on the processing control information under the control of the control apparatus 17. Specifically, the processing apparatus 1 first performs an operation for building the first structural layer SL#1 on the build surface MS corresponding to the surface of the workpiece W based on the processing control information (especially, information related to the processing path for building the structural layer SL#1). As a result, the structural layer SL#1 is built on the build surface MS, as illustrated in FIG. 7(a). Then, the processing apparatus 1 sets a surface (namely, an upper surface) of the structural layer SL#1 as a new build surface MS, and builds the second structural layer SL#2 on the new build surface MS. In order to build the structural layer SL#2, the control apparatus 17 first controls at least one of the head driving system 122 and the stage driving system 132 so that the processing head 121 moves along the Z-axis relative to the stage 131. Specifically, the control apparatus 17 controls at least one of the head driving system 122 and the stage driving system 132 to move the processing head 121 toward the +Z side and / or to move the stage 131 toward the -Z side so that the target irradiation area EA is set on the surface of the structural layer SL#1 (namely, the new build surface MS). Then, the processing apparatus 1 builds the structural layer SL#2 on the structural layer SL#1 by an operation that is the same as the operation for building the structural layer SL#1 based on the processing control information (especially, information related to the processing path corresponding to the structural layer SL#2) under the control of the control apparatus 17. As a result, the structural layer SL#2 is built as illustrated in FIG. 7(b). Then, the same operation is repeated until all of the structural layers SL that constitute the three-dimensional structural object ST to be built on the workpiece W are built. As a result, as illustrated in FIG. 7(c), the three-dimensional structural object ST is built by the layered structural body in which the plurality of structural layers SL are stacked.

### (2-2) Control Information Generation Operation

Next, the control information generation operation will be described.

### (2-2-1) Overview of Control Information Generation Operation

As described above, the measurement system 2 (especially, the control information generation unit 2211 of the control information generation apparatus 22) generates the processing control information by performing the control information generation operation.

The control information generation unit 2211 may generate the processing control information based on obj ect information indicating an actual three-dimensional shape of an object that is the workpiece W which the processing apparatus 1 expected to process.

Measurement information indicating a measured result of the three-dimensional shape of the workpiece W by the shape measurement apparatus 21 is one example of the object information. In this case, in order to generate the processing control information, the shape measurement apparatus 21 may measure the three-dimensional shape of the workpiece W, and the control information generation unit 2211 may generate the processing control information based on the measurement information. In a case where the processing apparatus 1 processes a plurality of workpieces W, the shape measurement apparatus 21 may measure the three-dimensional shape of each of the plurality of workpieces W collectively or sequentially, and the control information generation unit 2211 may sequentially generate a plurality of processing control information, which are used to process the plurality of workpieces W, respectively, based on the measurement information of the plurality of workpieces W.

However, in a case where the processing apparatus 1 processes the plurality of workpieces W which are expected to have the same characteristic (for example, shape), the shape measurement apparatus 21 may not measure the three-dimensional shapes of all of the plurality of workpieces W in order to generate the processing control information. For example, the shape measurement apparatus 21 may measure the three-dimensional shape of one workpiece W of the plurality of workpieces W, but may not measure the three-dimensional shape of the other workpiece W of the plurality of workpieces W. In this case, the control information generation unit 2211 may generate the processing control information, which is commonly used to process each of the plurality of workpieces W, based on the measurement information indicating the measured result of the three-dimensional shape of the one workpiece W.

A plurality of turbine blades attached to a rotor that is included in a turbine and that is rotatable around a rotation axis is examples of the plurality of workpieces W that are expected to have the same characteristic. Usually, the plurality of turbine blades that have the same characteristic are attached to the rotor. However, when the turbine is used, the turbine blades are worn due to a friction between fluid and the turbine blades. As a result, there is a possibility that the characteristics (especially, the shapes) of at least two of the plurality of turbine blades, which had the same characteristic before the turbine was used, are different from each other due to the use of the turbine. However, even in this case, there is a high possibility that worn amounts of the plurality of turbine blades are roughly the same. As a result, the characteristics of at least two of the plurality of turbine blades, which had the same characteristic before the turbine was used, are may be considered to be the same as each other, although they are strictly different from each other. In this case, the shape measurement apparatus 21 may measure the three-dimensional shape of one turbine blade of the plurality of worn turbine blades, but may not measure the three-dimensional shape of the other turbine blade of the plurality of worn turbine blades. The control information generation unit 2211 may generate the processing control information, which is commonly used to process (typically, repair) each of the plurality of worn turbine blades, based on the measurement information indicating the measured result of the three-dimensional shape of one turbine blade.

The object information may be any information as long as it directly or indirectly indicates the actual three-dimensional shape of the workpiece W. For example, the object information may be point-cloud information that indicates the actual three-dimensional shape of the workpiece W by using a plurality of points. In the present example embodiment, an example in which an object model OM is used as the object information will be described. In other words, in the present example embodiment, an example in which model information indicating the object model OM is used as the object information. The object model OM is a three-dimensional model that indicates the actual three-dimensional shape of the workpiece W. Namely, the object model OM is a three-dimensional model having the three-dimensional shape that is the same as the actual three-dimensional shape of the workpiece W. At least one of a wireframe model, a surface model, and a solid model is one example of the three-dimensional models. In the present example embodiment, an example in which a mesh model (typically, a polygonal mesh model, the same applies to the below-described description), which is one specific example of the surface model, is used as the object model OM will be described. The mesh model is a three-dimensional model that represents the three-dimensional shape of the object by using vertices, edges, and surfaces. The mesh model is a three-dimensional model that represents the three-dimensional shape of the object by using a plurality of meshes (in other words, facets, or computational grids) having polygonal shapes.

The object model OM may be generated based on the measurement information indicating the measured result of the three-dimensional shape of the workpiece W by the shape measurement apparatus 21. Namely, the object model OM may be generated based on the measured result of the three-dimensional shape of the workpiece W by the shape measurement apparatus 21. In this case, the control information generation unit 2211 may generate the object model OM based on the measurement information. Alternatively, an apparatus (for example, the shape measurement apparatus 21) that is different from the control information generation unit 2211 may generate the object model OM based on the measurement information.

Alternatively, the object model OM may be generated without using the measurement information indicating the measured result of the three-dimensional shape of the workpiece W by the shape measurement apparatus 21. For example, the control information generation unit 2211 (alternatively, an apparatus that is different from the control information generation unit 2211, the same applies to this paragraph) may estimate the actual three-dimensional shape of the workpiece W based on a factor that affects the three-dimensional shape of the workpiece W, and generate the object model OM based on an estimated result. Namely, the control information generation unit 2211 may generate, as the object model OM, the three-dimensional model that indicates the estimated three-dimensional shape. In this case, the control information generation unit 2211 may estimate the actual three-dimensional shape of the workpiece W by using an arithmetic model that is buildable by a machine learning (for example, an arithmetic model that includes a neural network (so-called artificial intelligence (AI))). Alternatively, the user of the processing system SYS may estimate the actual three-dimensional shape of the workpiece W based on the factor that affects the three-dimensional shape of the workpiece W, and generate the object model OM based on the estimated result. Namely, the user may generate, as the object model OM, the three-dimensional model that indicates the estimated three-dimensional shape. Alternatively, the control information generation unit 2211 may generate the object model OM based on the estimated result of the actual three-dimensional shape of the workpiece W by the user.

An environment in which the workpiece W is used is one example of the factor that affects the three-dimensional shape of the workpiece W. A force that is applied to the workpiece W in a situation where the workpiece W is used is another example of the factor that affects the three-dimensional shape of the workpiece W. A time period during which the workpiece W is used is another example of the factor that affects the three-dimensional shape of workpiece W. For example, in a case where the workpiece W is the above-described turbine blade, at least one of an environment in which the turbine blade is used, a force that is applied to the turbine blade, and a time period during which the turbine blade is used is one example of the factor that affects the three-dimensional shape of the turbine blade. In this case, the control information generation unit 2211, the apparatus that is different from the control information generation unit 2211, or the user may estimate the worn amount of the turbine blade (namely, the lost part of the turbine blade) based on the factor that affects the three-dimensional shape of the turbine blade, and may estimate the actual three-dimensional shape of the turbine blade based on the estimated worn amount.

The three-dimensional model indicated by a file indicating CAD data may be used as the object model OM. At least one of a file whose extension is DWF, a file whose extension is DXF, a file whose extension is DWG, and a file whose extension is STP is one example of the file indicating the CAD data. In a case where the mesh model is used as the object model OM, the three-dimensional model indicated by a file whose extension is STL may be used as the object model OM.

The control information generation unit 2211 may generate the processing control information based on reference information indicating a target shape of the workpiece W after the processing, in addition to or instead of the above-described object information. Namely, the control information generation unit 2211 may generate the processing control information based on the reference information indicating the designed, nominal, or ideal three-dimensional shape of the workpiece W after the processing.

The reference information may be any information as long as it directly or indirectly indicates the target shape of the workpiece W. For example, the reference information may be point-cloud information that indicates the target shape of the workpiece W by using a plurality of points. In the present example embodiment, an example in which a reference model RM is used as the reference information will be described. In other words, in the present example embodiment, an example in which model information indicating the reference model RM is used as the reference information will be described. The reference model RM is a three-dimensional model that indicates the target shape of the workpiece W. Namely, the reference model RM is a three-dimensional model having the three-dimensional shape that is the same as the target shape of the workpiece W. In the present example embodiment, an example in which the mesh model that is one specific example of the surface model is used as the reference model RM. Incidentally, the reference model RM may be referred to as a target model, because the reference model RM indicates the target shape of the workpiece W.

A CAD (Computer Aided Design) model of the workpiece W having the target shape may be used as the reference model RM. The three-dimensional model that is generated based on information acquired by actually measuring the three-dimensional shape of the workpiece W having the target shape may be used as the reference model RM. In this case, the three-dimensional model indicated by the file indicating the CAD data may be used as the reference model RM. At least one of a file whose extension is DWF, a file whose extension is DXF, a file whose extension is DWG, and a file whose extension is STP is one example of the file indicating the CAD data. In a case where the mesh model is used as the reference model RM, the three-dimensional model indicated by a file whose extension is STL may be used as the reference model RM.

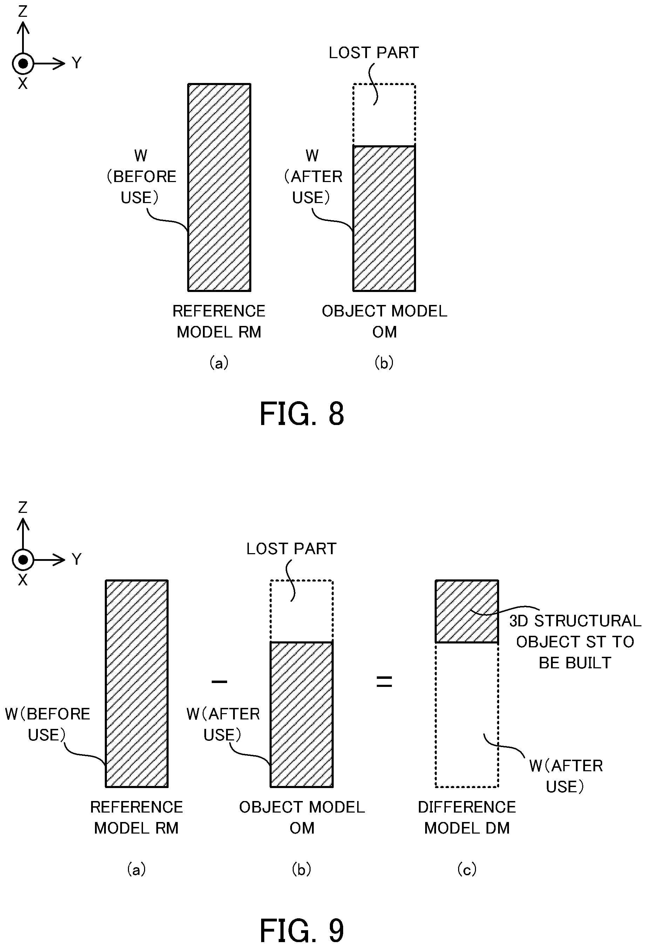

As illustrated in FIG. 8(a) and FIG. 8(b) that schematically illustrates the reference model RM and the object model OM, respectively, the target shape of the workpiece W (namely, the designed or ideal three-dimensional shape of the workpiece W) indicated by the reference model RM is typically different from the actual three-dimensional shape of the workpiece W indicated by the object model OM. For example, in a case where the item that needs to be repaired having the lost part is used as the workpiece W as described above, the object model OM indicates the three-dimensional shape of the workpiece W a part of which is lost due to the use as illustrated in FIG. 8(b), while the reference model RM indicates the three-dimensional shape of the workpiece W that is not lost as illustrated in FIG. 8(a). Namely, the object model OM indicates the three-dimensional shape of the workpiece W that has actually been used, while the reference model RM indicates the three-dimensional shape of the workpiece W before it is actually used. As one example, in a case where the workpiece W is the turbine blade a part of which is worn, the object model OM indicates the three-dimensional shape of the turbine blade a part of which is worn, while the reference model RM indicates the three-dimensional shape of the turbine blade that is not worn. Namely, the object information indicates the three-dimensional shape of the turbine blade after the turbine blade has actually been used as the component of the turbine, while the reference information indicates the three-dimensional shape of the turbine blade before the turbine blade is used as the component of the turbine. In other words, the object information indicates the three-dimensional shape of the used turbine blade, while the reference information indicates the three-dimensional shape of the unused turbine blade. Therefore, in a case where a part of the workpiece W is lost (for example, worn) due to the use of the workpiece W, the target shape of the workpiece W indicated by the reference model RM is usually different from the actual three-dimensional shape of the workpiece W indicated by the object model OM.

Incidentally, "the use of the workpiece W" in the present example embodiment may include using the workpiece W in a way that is appropriate for an intended use of the workpiece W. In a case where the workpiece W is used as a component of a product, "the use of the workpiece W" may include using the product including the workpiece W in a way that is appropriate for an intended use of the product. For example, in a case where the workpiece W includes the turbine blade, the use of the turbine blade may include using the turbine including the turbine blade in a way that is appropriate for an intended use of the turbine.

Moreover, considering that the above-described situation where a part of the workpiece W is lost (for example, worn) due to the user of the workpiece W is one example of a situation where the processing system SYS in the present example embodiment is used, "the use of the workpiece W" may include a use of the workpiece W that causes a loss of a part of the workpiece W. For example, "the use of the workpiece W" may include a use of the workpiece W over a long time period that causes the loss of a part of the workpiece W. Therefore, the actually used the workpiece W may include the workpiece W that has been used to the extent that a part of the workpiece W is lost. On the other hand, the workpiece W before it is actually used may include the workpiece W that has not been used to the extent that a part of the workpiece W is lost although it has been used. For example, the unuse workpiece W may include the use of the workpiece W over a short time period (for example, a trial operation of the workpiece W or the product including the workpiece W) that does not cause the loss of a part of the workpiece W. Of course, the workpiece W before it is actually used may literally include the workpiece W that has not yet been used. For example, the workpiece W before it is actually used may include the workpiece W before it is shipped as the product or the component. For example, the workpiece W before it is actually used may include the workpiece W in a design stage.

The reference model RM may be generated based on the measured result of the three-dimensional shape of the workpiece W before it is actually used. In this case, the shape measurement apparatus 21 (alternatively, an apparatus that is different from the shape measurement apparatus 21, the same applies to this paragraph) may measure the three-dimensional shape of the workpiece W before it is actually used, and the reference model RM may be generated based on the measured result by the shape measurement apparatus 21. Alternatively, the reference model RM may be generated based on the CAD data indicates the designed three-dimensional shape of the workpiece W.

In the present example embodiment, the control information generation unit 2211 generates the processing control information based on both the object model OM, which is one example of the object information, and the reference model RM, which is one example of the reference information. Specifically, as described above, the reference model RM indicates the target shape of the workpiece W, and the object model OM indicates the actual three-dimensional shape of the workpiece W. In this case, a difference between the reference model RM and the object model OM corresponds to a three-dimensional model that indicates the three-dimensional shape of the build object (namely, the three-dimensional structural object ST) that should be built by the processing apparatus 1 performing the additive manufacturing. Therefore, the control information generation unit 2211 may generate the three-dimensional model corresponding to the difference between the reference model RM and the object model OM as a difference model DM that indicates the three-dimensional shape of the three-dimensional structural object ST that should be built by the processing apparatus 1 performing additive manufacturing. The difference model DM is typically the three-dimensional model that corresponds to a part of the reference model RM. Incidentally, FIG. 9(a) schematically illustrates the reference model RM, FIG. 9(b) schematically illustrates the object model OM, and FIG. 9(c) schematically illustrates the difference model DM that is generated based on the reference model RM illustrated in FIG. 9(a) and the object model OM illustrated in FIG. 9(b). Then, the control information generation unit 2211 may generate the processing control information based on the difference model DM. For example, the control information generation unit 2211 may generate a plurality of slice data, which correspond to the plurality of structural layers SL included in the three-dimensional structural object ST, respectively, by performing a slicing process for dividing the difference model DM into a plurality of layered models with a layered pitch corresponding to a thickness of the structural layer SL. Then, the control information generation unit 2211 may generate the plurality of pieces of processing control information, which are used to build the plurality of structural layers SL, respectively, based on the plurality of slice data.

The three-dimensional model indicated by a file indicating CAD data may be used as the difference model DM. At least one of a file whose extension is DWF, a file whose extension is DXF, a file whose extension is DWG, and a file whose extension is STP is one example of the file indicating the CAD data. In a case where the mesh model is used as the difference model DM, the three-dimensional model indicated by a file whose extension is STL may be used as the difference model DM.

A file (for example, a CAD file that indicates the CAD data, the same applies to this paragraph) may include the difference model DM that is assembly information and the object model OM that is assembly information. The file may include the reference model RM that is assembly information in addition to the difference model DM that is the assembly information and the object model OM that is the assembly information. The file may include a first object model OM acquired by measuring the workpiece W with a first measurement accuracy and a second object model OM acquired by measuring the workpiece W with a second measurement accuracy that is higher than the first measurement accuracy. In this case, the file may include information related to the measurement accuracy that is used to acquire the object model OM. For example, the first object model OM may be associated with information related to the measurement accuracy that is used to acquire the first object model OM in the file. For example, the second object model OM may be associated with information related to the measurement accuracy that is used to acquire the second object model OM in the file.

Alternatively, the file (for example, the CAD file indicating the CAD data, the same applies to this paragraph) may include at least one of the object model OM, the reference model RM, and the difference model DM in an information format that is different from an information format of the assembly information. Alternatively, at least one of a file including the object model OM, a file including the reference model RM, and a file including the difference model DM may be stored in the storage apparatus 222 or the like. Namely, the object model OM, the reference model RM, and the difference model DM may be included in separate files, respectively. In this case, a management file that includes information indicating that at least two of the file including the object model OM, the file including the reference model RM, and the file including the difference model DM are associated with each other may be stored in the storage apparatus 222 or the like.

However, the control information generation unit 2211 may generate the processing control information by using the object model OM but without using the reference model RM. The control information generation unit 2211 may generate the processing control information by using the reference model RM but without using the object model OM.

### (2-2-2) Technical Problem occurred in a case where Processing Control Information is generated

As described above, a part of the workpiece W is lost due to the use of the workpiece W. On the other hand, there is a possibility that at least a part of the workpiece W is physically deformed due to the use of the workpiece W, in addition to or instead of a part of the workpiece W being lost. For example, there is a possibility that the workpiece W is physically deformed due to a load applied to the workpiece W that is used in a high-temperature environment. Namely, there is a possibility that a creep occurs. For example, there is a possibility that the workpiece W is physically deformed due to an aging or other factors.

In a case where the workpiece W is deformed, "the use of the workpiece W" may include a use of the workpiece W that causes a deformation of the workpiece W. For example, "the use of the workpiece W" may include a use of the workpiece W over a long time period that causes the deformation of the workpiece W. Therefore, the actually used the workpiece W may include the workpiece W that has been used to the extent that the workpiece W is deformed. On the other hand, the workpiece W before it is actually used may include the workpiece W that has not been used to the extent that the workpiece W is deformed although it has been used. For example, the unuse workpiece W may include the use of the workpiece W over a short time period (for example, a trial operation of the workpiece W or the product including the workpiece W) that does not cause the deformation of the workpiece W.

Incidentally, it can be said that the workpiece W is deformed even in a case where a part of the workpiece W is lost (for example, worn) due to the use of the workpiece W, because the three-dimensional shape of the workpiece W changes. However, in the present example embodiment, the "deformation of the workpiece W" means the deformation of the workpiece W that occurs due to the use of the workpiece W and the deformation of the workpiece W caused by a factor that is different from the loss of the workpiece W.

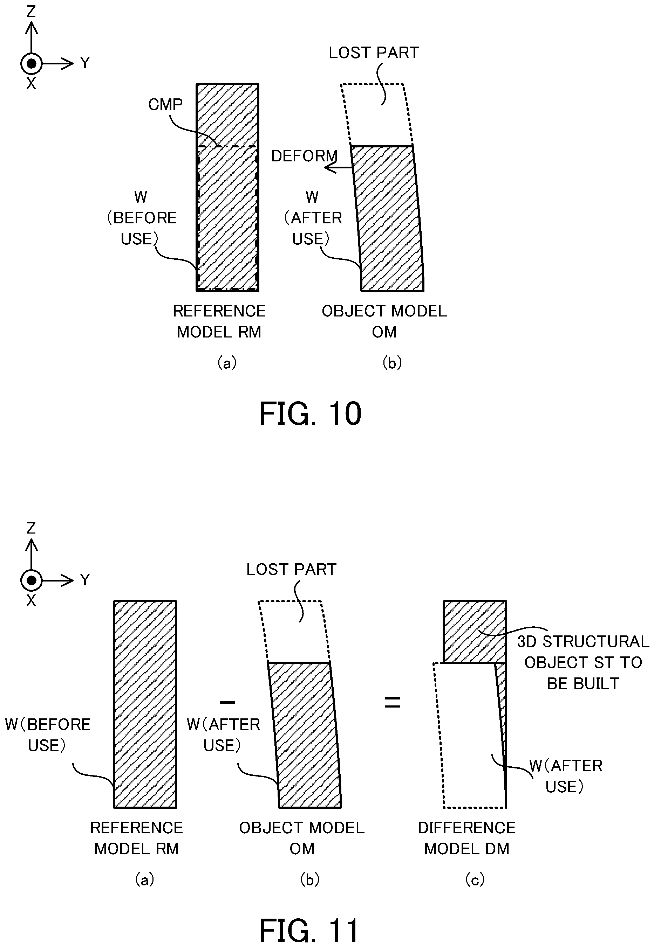

Here, as described above, the object model OM indicates the three-dimensional shape of the actually used workpiece W. Therefore, in a case where the workpiece W is deformed due to the use of the workpiece W, the object model OM indicates the actual three-dimensional shape of the workpiece W that has been deformed due to the use of the workpiece W, as illustrated in FIG. 10(b) that schematically illustrates the object model OM that is generated in a case where the workpiece W is deformed. Namely, the object model OM reflects the deformation of the workpiece W caused by the use of the workpiece W. On the other hand, as described above, the reference model RM indicates the three-dimensional shape of the workpiece W before it is actually used. Therefore, the reference model RM does not reflect the deformation of the workpiece W caused by the use of the workpiece W at all. Therefore, as illustrated in FIG. 10(a), the reference model RM indicates the target shape of the undeformed workpiece W.

In this case, although the three-dimensional shape of the object model OM should be the same as a three-dimensional shape of a corresponding model part CMP, which corresponds to the object model OM, of the reference model RM, the three-dimensional shape of the object model OM is different from the three-dimensional shape of the corresponding model part CMP of the reference model RM due to the deformation of the workpiece W, as illustrated in FIG. 10(a) and FIG. 10(b). As a result, as illustrated in FIG. 10(c) that schematically illustrates the difference model DM that is generated in a case where the workpiece W is deformed, the difference model DM, which corresponds to the difference between the reference model RM and the object model OM, indicates a three-dimensional shape that is different from the three-dimensional shape of the three-dimensional structural object ST that should be built by the processing apparatus 1 performing the additive manufacturing. Incidentally, FIG. 11(a) schematically illustrates the reference model RM in a case where the workpiece W is deformed due to the use of the workpiece W, and FIG. 11(b) schematically illustrates the object model OM in a case where the workpiece W is deformed, and FIG. 11(c) schematically illustrates the difference model DM that is generated based on the reference model RM illustrated in FIG. 11(a) and the object model OM illustrated in FIG. 11(b). For example, the difference model DM indicates a three-dimensional shape that is different from the three-dimensional shape of the lost part of the workpiece W. As a result, in a case where the processing control information is generated based on this difference model DM, the processing apparatus 1 builds the three-dimensional structural object ST whose shape is different from the desired shape. Namely, the processing apparatus 1 is unable to build the three-dimensional structural object ST whose shape is the desired shape. For example, the processing apparatus 1 is unable to build the three-dimensional structural object ST for appropriately filling in the lost part. Thus, in a case where the workpiece W is deformed due to the use of the workpiece W, the measurement system 2 (especially, the control information generation apparatus 22) has a technical problem that there is a possibility that it is unable generate the processing control information for controlling the processing apparatus 1 to build the three-dimensional structural object ST whose shape is the desired shape.

Therefore, in the present example embodiment, the measurement system 2 performs the below-described control information generation operation in order to solve the above described technical problem. As a result, even in a case where the workpiece W is deformed due to the use of the workpiece W, the measurement system 2 (especially, the control information generation apparatus 22) is able to generate the processing control information for controlling the processing apparatus 1 to build the three-dimensional structural object ST whose shape is the desired shape. Therefore, even in a case where the workpiece W is deformed due to the use of the workpiece W, the processing apparatus 1 is able to build the three-dimensional structural object ST whose shape is the desired shape.

Incidentally, one reason why the above-described technical problem occurs is that the three-dimensional shape of the object model OM is different from the three-dimensional shape of the corresponding model part CMP of the reference model RM as described above. Therefore, even in a case where the workpiece W is not deformed, there is a possibility that the above-described technical problem occurs in a case where the three-dimensional shape of the object model OM is different from the three-dimensional shape of the corresponding model part CMP of the reference model RM. For example, there is a possibility that the three-dimensional shape of the object model OM is different from the three-dimensional shape of the corresponding model part CMP of the reference model RM in a case where the three-dimensional shape of the workpiece W is different from the designed three-dimensional shape due to a manufacturing error of the workpiece W. For example, there is a possibility that the three-dimensional shape of the object model OM, which is generated based on the measured result by the shape measurement apparatus 21, is different from the three-dimensional shape of the corresponding model part CMP of the reference model RM due to a measurement error of the shape measurement apparatus 21 that measures the three-dimensional shape of the workpiece W. For example, there is a possibility that the three-dimensional shape of the object model OM is different from the three-dimensional shape of the corresponding model part CMP of the reference model RM due to a size error of the reference model RM. Even in this case, the measurement system 2 may perform the below-described control information generation operation. As a result, the measurement system 2 (especially, the control information generation apparatus 22) is able to generate the processing control information for controlling the processing apparatus 1 to build the three-dimensional structural object ST whose shape is the desired shape in any case where the three-dimensional shape of the object model OM is different from the three-dimensional shape of the corresponding model part CMP of the reference model RM, Therefore, the processing apparatus 1 is able to build the three-dimensional structural object whose size is the desired shape in any case where the three-dimensional shape of the object model OM is different from the three-dimensional shape of the corresponding model part CMP of the reference model RM.

However, in the below-described description, the control information generation operation that is performed in a situation where the three-dimensional shape of the object model OM is different from the three-dimensional shape of the corresponding model part CMP of the reference model RM due to the deformation of the workpiece W will be described for simplicity of the description. However, even in a situation where the three-dimensional shape of the object model OM is different from the three-dimensional shape of the corresponding model part CMP of the reference model RM due to a factor that is different from the deformation of the workpiece W, the measurement system 2 may perform the below-described control information generation operation.

### (2-2-3) Flow of Control Information Generation Operation

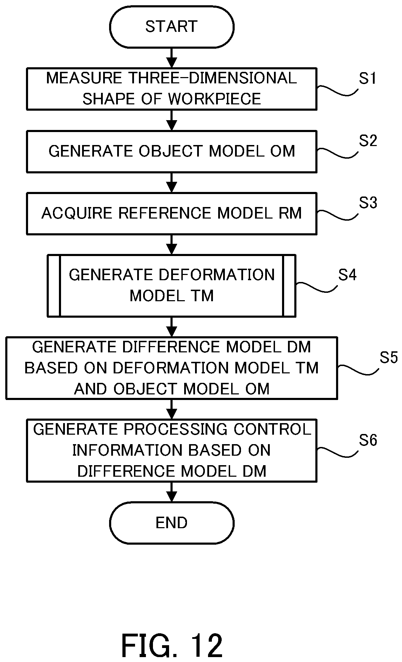

Next, with reference to FIG. 12, a flow of the control information generation operation in the present example embodiment will be described. FIG. 12 is a flowchart that illustrates the flow of the control information generation operation in the present example embodiment.

As illustrated in FIG. 12, the shape measurement apparatus 21 measures the three-dimensional shape of the workpiece W (a step S1). Especially, in the present example embodiment, the shape measurement apparatus 21 measures the three-dimensional shape of the used workpiece W (a step S1). As a result, the shape measurement apparatus 21 generates the measurement information that indicates the three-dimensional shape of the workpiece W. The shape measurement apparatus 21 outputs (for example, transmits) the generated measurement information to the control information generation apparatus 22.

However, in the step S1, any measurement apparatus that is different from the shape measurement apparatus 21 may measure the three-dimensional shape of the workpiece W. For example, a measurement apparatus positioned at an outside of the measurement system 2 may measure the three-dimensional shape of the workpiece W. For example, a measurement apparatus positioned at an outside of the processing system SYS may measure the three-dimensional shape of the workpiece W. Any measurement apparatus outputs (for example, transmits) the generated measurement information to the control information generation apparatus 22.

Then, the control information generation apparatus 22 (especially, the control information generation unit 2211) generates the object model OM, which indicates the actual three-dimensional shape of the workpiece W, based on the measurement information generated at the step S1 (a step S2). Namely, the control information generation unit 2211 generates the model information that indicates the object model OM (the step S2).

However, in a case where the model generation apparatus that is different from the control information generation unit 2211 generates the object model OM as described above, the control information generation unit 2211 may not generate the object model OM. In this case, the control information generation unit 2211 may acquire the object model OM from the model generation apparatus. Alternatively, in a case where the object model OM (specifically, the model information indicating the object model OM) is stored in advance on a recording medium such as the storage apparatus 222, the control information generation unit 2211 may acquire the object model OM by reading the object model OM from the recording medium. Alternatively, in a case where the object model OM (specifically, the model information indicating the object model OM) is stored in an external apparatus that is configured to communicate with the measurement system 2 through a communication network, the control information generation unit 2211 may acquire the object model OM by downloading the object model OM from the external apparatus. Incidentally, in the example illustrated in FIG. 12, the control information generation apparatus 22 may be considered to acquire the object model OM by generating the object model OM.

The control information generation apparatus 22 may control the output apparatus 225, which is configured to serve as the display apparatus, to display the object model OM generated at the step S2. The user of the processing system SY may use the input apparatus 224 to operate the object model OM displayed on the output apparatus 225. For example, the user may use the input apparatus 224 to perform an operation for changing a display aspect of the object model OM displayed on the output apparatus 225. As one example, the user may use the input apparatus 224 to perform an operation for rotating the object model OM displayed on the output apparatus 225. As another example, the user may use the input apparatus 224 to perform an operation for changing a display size of the object model OM displayed on the output apparatus 225.

In parallel with, before, or after the operations from the step S1 to the step S2, the control information generation unit 2211 acquires the reference model RM (a step S3). For example, in a case where the reference model RM (specifically, the model information indicating the reference model RM) is stored in advance on a recording medium such as the storage apparatus 222, the control information generation unit 2211 may acquire the reference model RM by reading the reference model RM from the recording medium. Alternatively, in a case where the reference model RM (specifically, the model information indicating the reference model RM) is stored in an external apparatus that is configured to communicate with the measurement system 2 through a communication network, the control information generation unit 2211 may acquire the reference model RM by downloading the reference model RM from the external apparatus.

The control information generation unit 2211 may acquire the reference model RM based on an instruction of the user of the processing system SYS. Specifically, the user may use the input apparatus 224 to input, to the control information generation apparatus 22, an instruction for selecting one reference model RM of the plurality of different reference models RM. In this case, the output apparatus 225, which is configured to serve as the display apparatus, may display the plurality of different reference models RM. The user may select one reference model RM of the plurality of different reference models RM displayed by the output apparatus 225. Then, the control information generation apparatus 225 may acquire the one reference model RM selected by the user.

The control information generation apparatus 22 may control the output apparatus 225, which is configured to serve as the display apparatus, to display the reference model RM acquired at the step S3. The control information generation apparatus 22 may control the output apparatus 225, which is configured to serve as the display apparatus, to display both the reference model RM and the object model OM. The user of the processing system SY may use the input apparatus 224 to operate the reference model RM displayed on the output apparatus 225. For example, the user may use the input apparatus 224 to perform an operation for changing a display aspect of the reference model RM displayed on the output apparatus 225. As one example, the user may use the input apparatus 224 to perform an operation for rotating the reference model RM displayed on the output apparatus 225. As another example, the user may use the input apparatus 224 to perform an operation for changing a display size of the reference model RM displayed on the output apparatus 225.

Then, in the present example embodiment, the control information generation unit 2211 generates a deformation model TM (a step S4). The deformation model TM is a three-dimensional model that indicates the target shape of the workpiece W after the processing, as with the reference model RM. Incidentally, since the deformation model TM indicates the target shape of the workpiece W, it may be referred to as the target model as with the reference model RM.

The deformation model TM is different from the reference model RM in the following point. Specifically, the deformation model TM is different from the reference model RM, which is the three-dimensional model indicating the target shape of the undeformed workpiece W, in that it is the three-dimensional model indicating the target shape of the deformed workpiece W. Namely, the deformation model TM is different from the reference model RM, which is the three-dimensional model indicates the target shape that does not reflect the deformation of the workpiece W, in that it is the three-dimensional model indicating the target shape that reflects the deformation of the workpiece W.

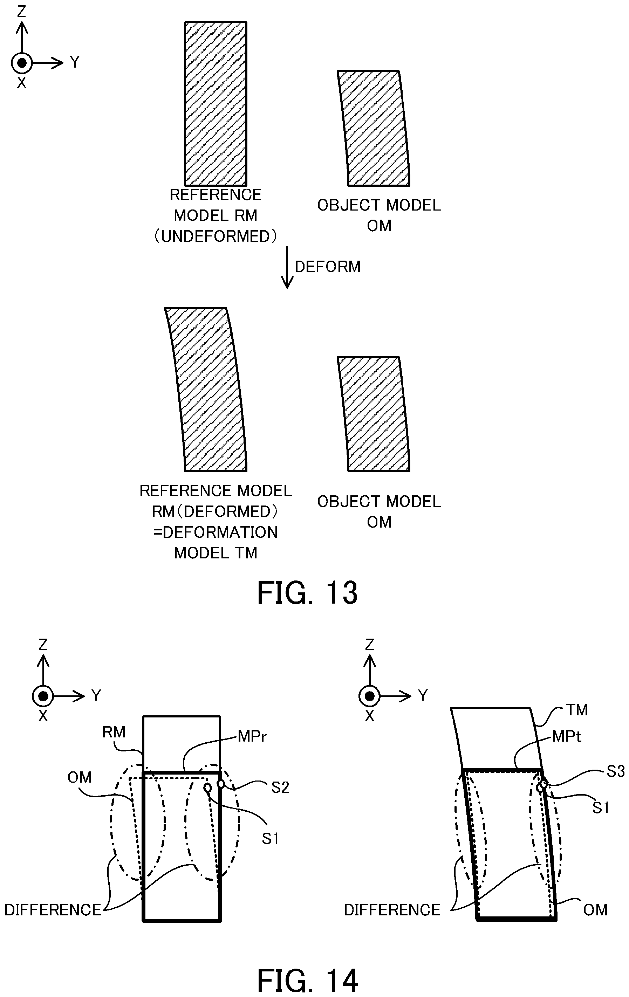

In order to generate the deformation model TM, the control information generation unit 2211 may deform the reference model RM in accordance with the deformation of the workpiece W. Namely, the control information generation unit 2211 may deform the reference model RM to generate the deformed reference model RM as the deformation model TM. Specifically, as described above, the object model OM reflects the deformation of the workpiece W. On the other hand, as described above, the reference model RM does not reflect the deformation of the workpiece W. In this case, as illustrated in FIG. 13 that schematically illustrates the undeformed reference model RM and the deformed reference model RM (namely, the deformation model TM), the control information generation unit 2211 may deform the reference model RM, which does not reflect the deformation of the workpiece W, based on the object model OM, which reflects the deformation of the workpiece W. Namely, the control information generation unit 2211 may deform the reference model RM, which does not reflect the deformation of the workpiece W, in accordance with the actual shape of the workpiece W indicated by the object model OM (namely, the shape of the deformed workpiece W). However, the control information generation unit 2211 may deform the reference model RM without using the object model OM, as long as it is possible to deform the reference model RM in accordance with the deformation of the workpiece W.

As illustrated in FIG. 14 that schematically illustrates the undeformed reference model RM and the deformed reference model RM (namely, the deformation model TM), the control information generation unit 2211 may deform the reference model RM so that a difference between the object model OM and a corresponding model part MPt, which corresponds to the object model OM, of the deformation model TM is smaller than a difference between the object model OM and a corresponding model part MPr, which corresponds to the object model OM, of the reference model RM. Incidentally, the difference between object model OM and the corresponding model part MPr of the reference model RM may be considered to be equivalent to a deformed amount of the workpiece W.

As illustrated in FIG. 14, the difference between the object model OM and the corresponding model part MPt of the deformation model TM may mean a difference between a three-dimensional shape of a first part S11 of a surface of the object model OM and a three-dimensional shape of a second part S12, which corresponds to the first part S11 of the object model OM, of a surface of the deformation model TM. Similarly, as illustrated in FIG. 14, the difference between the object model OM and the corresponding model part MPr of the reference model RM may mean a difference between a three-dimensional shape of the first part S11 of the surface of the object model OM and a three-dimensional shape of a third part S13, which corresponds to the first part S11 of the object model OM, of a surface of the reference model RM.

As one example, in a case where the object model OM is the mesh model as described above, a vertex of the mesh is positioned on the surface of the object model OM. Similarly, in a case where the reference model RM is the mesh model, the vertex of the mesh is positioned on the surface of the reference model RM. Similarly, in a case where the deformation model TM is the mesh model, the vertex of the mesh is positioned on the surface of the deformation model TM. In this case, the difference between the object model OM and the corresponding model part MPt of the deformation model TM may be defined by using the vertex of the mesh. Similarly, the difference between the object model OM and the corresponding model part MPr of the reference model RM may be defined by using the vertex of the mesh.

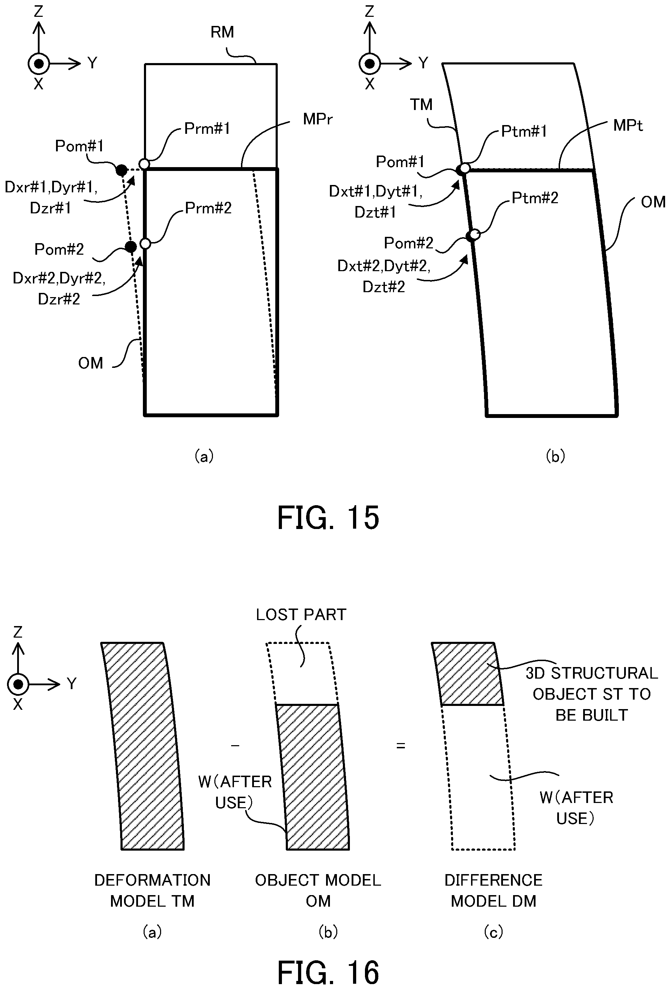

For example, FIG. 15(a) illustrates an example in which a vertex Pom#1 of a first mesh of the object model OM, which is the mesh model, corresponds to a vertex Prm#1 of a first of the reference model RM, which is the mesh model. Furthermore, FIG. 15(a) illustrates an example in which a vertex Pom#2 of a second mesh of the object model OM corresponds to a vertex Prm#2 of a second of the reference model RM. Namely, FIG. 15(a) illustrates an example in which the vertex Pom#1 of the object model OM coincides with the vertex Prm#1 of the reference model RM and the vertex Pom#2 of the object model OM coincides with the vertex Prm#2 of the reference model RM in a case where the workpiece W is not deformed. In this case, a difference between the vertex Pom#1 and the vertex Prm#1 may be considered to be equivalent to the deformed amount of one part of the workpiece W. Similarly, a difference between the vertex Pom#2 and the vertex Prm#2 may be considered to be equivalent to the deformed amount of another part of the workpiece W.

On the other hand, FIG. 15(b) illustrates an example in which the vertex Pom#1 of the object model OM corresponds to a vertex Ptm#1 of a first mesh of the deformation model TM, which is the mesh model. Furthermore, FIG. 15(b) illustrates an example in which the vertex Pom#2 of the object model OM corresponds to a vertex Ptm#2 of a second mesh of the deformation model TM. Incidentally, since the deformed reference model RM is used as the deformation model TM, the vertex Ptm#1 of the deformation model TM is equivalent to the vertex Prm#1 of the deformed reference model RM. Similarly, the vertex Ptm#2 of the deformation model TM is equivalent to the vertex Prm#2 of the deformed reference model RM.

In this case, the control information generation unit 2211 may use a distance between the vertex Pom#1 of the object model OM and the vertex Prm#1 of the reference model RM as an index value indicating the difference between the object model OM and the corresponding model part MPr of and the reference model RM. The control information generation unit 2211 may use a distance between the vertex Pom#2 of the object model OM and the vertex Prm#2 of the reference model RM as the index value indicating the difference between the object model OM and the corresponding model part MPr of the reference model RM. Similarly, the control information generation unit 2211 may use a distance between the vertex Pom#1 of the object model OM and the vertex Ptm#1 of the deformation model TM as an index value indicating the difference between the object model OM and the corresponding model part MPt of the deformation model TM. The control information generation unit 2211 may use a distance between the vertex Pom#2 of the object model OM and the vertex Ptm#2 of the deformation model TM as the index value indicating the difference between the object model OM and the corresponding model part MPt of the deformation model TM.

In this case, as illustrated in FIG. 15(a) and FIG. 15(b), the control information generation unit 2211 may deform the reference model RM so that the distance between the vertex Pom#1 and the vertex Ptm#1 (see FIG. 15(b)) is shorter than the distance between the vertex Pom#1 and the vertex Prm#1 (see FIG. 15(a)). For example, the control information generation unit 2211 may deform the reference model RM so that a distance Dxt#1 between the vertex Pom#1 and the vertex Ptm#1 in the X-axis direction is shorter than a distance Dxr#1 between the vertex Pom#1 and the vertex Prm#1 in the X-axis direction. For example, the control information generation unit 2211 may deform the reference model RM so that a distance Dyt#1 between the vertex Pom#1 and the vertex Ptm#1 in the Y-axis direction is shorter than a distance Dyr#1 between the vertex Pom#1 and the vertex Prm#1 in the Y-axis direction. For example, the control information generation unit 2211 may deform the reference model RM so that a distance Dzt#1 between the vertex Pom#1 and the vertex Ptm#1 in the Z-axis direction is shorter than a distance Dzr#1 between the vertex Pom#1 and the vertex Prm#1 in the Z-axis direction.

Incidentally, the control information generation unit 2211 may deform the reference model RM so that the distance Dyt#1 is shorter than the distance Dyr#1 and / or the distance Dzt#1 is shorter than the distance Dzr#1 while the distance Dxt#1 is not shorter than the distance Dxr#1. The control information generation unit 2211 may deform the reference model RM so that the distance Dxt#1 is shorter than the distance Dxr#1 and / or the distance Dzt#1 is shorter than the distance Dzr#1 while the distance Dyt#1 is not shorter than the distance Dyr#1. The control information generation unit 2211 may deform the reference model RM so that the distance Dxt#1 is shorter than the distance Dxr#1 and / or the distance Dyt#1 is shorter than the distance Dyr#1 while the distance Dzt#1 is not shorter than the distance Dzr#1.

Similarly, as illustrated in FIG. 15(a) and FIG. 15(b), the control information generation unit 2211 may deform the reference model RM so that the distance between the vertex Pom#2 and the vertex Ptm#2 (see FIG. 15(b)) is shorter than the distance between the vertex Pom#2 and the vertex Prm#2 (see FIG. 15(a)). For example, the control information generation unit 2211 may deform the reference model RM so that a distance Dxt#2 between the vertex Pom#2 and the vertex Ptm#2 in the X-axis direction is shorter than a distance Dxr#2 between the vertex Pom#2 and the vertex Prm#2 in the X-axis direction. For example, the control information generation unit 2211 may deform the reference model RM so that a distance Dyt#2 between the vertex Pom#2 and the vertex Ptm#2 in the Y-axis direction is shorter than a distance Dyr#2 between the vertex Pom#2 and the vertex Prm#2 in the Y-axis direction. For example, the control information generation unit 2211 may deform the reference model RM so that a distance Dzt#2 between the vertex Pom#2 and the vertex Ptm#2 in the Z-axis direction is shorter than a distance Dzr#2 between the vertex Pom#2 and the vertex Prm#2 in the Z-axis direction.

Incidentally, the control information generation unit 2211 may deform the reference model RM so that the distance Dyt#2 is shorter than the distance Dyr#2 and / or the distance Dzt#2 is shorter than the distance Dzr#2 while the distance Dxt#2 is not shorter than the distance Dxr#2. The control information generation unit 2211 may deform the reference model RM so that the distance Dxt#2 is shorter than the distance Dxr#2 and / or the distance Dzt#2 is shorter than the distance Dzr#2 while the distance Dyt#2 is not shorter than the distance Dyr#2. The control information generation unit 2211 may deform the reference model RM so that the distance Dxt#2 is shorter than the distance Dxr#2 and / or the distance Dyt#2 is shorter than the distance Dyr#2 while the distance Dzt#2 is not shorter than the distance Dzr#2.

The control information generation unit 2211 may deform the reference model RM so that the corresponding model part MPt of the deformation model TM coincides with the object model OM. For example, the control information generation unit 2211 may deform the reference model RM so that the vertex Pom#1 of the object model OM coincides with the vertex Ptm#1 of the deformation model TM. The control information generation unit 2211 may deform the reference model RM so that the distance between the vertex Pom#1 and the vertex Ptm#1 becomes zero. For example, the control information generation unit 2211 may deform the reference model RM so that at least one of the distances Dxt#1, Dyt#1, Dzt#1, Dxt#2, Dyt#2, and Dzt#2 becomes zero.

Incidentally, in FIG. 15(a), the distance between the vertex Pom#1 of the object model OM and the vertex Prm#1 of the reference model RM may be different from the distance between the vertex Pom#2 of the object model OM and the vertex Prm#2 of the reference model RM. Namely, the deformed amount of one part of the workpiece W may be different from the deformed amount of another part of the workpiece W. As one example, in a case where the workpiece W is the turbine blade, the deformed amount of one part of the turbine blade generally becomes larger as the one part is closer to a tip of the turbine blade. Namely, the deformed amount of one part of the turbine blade generally becomes smaller as the one part is closer to a base of the turbine blade. Incidentally, the base of the turbine blade may mean a shank of the turbine blade (namely, a part that is attached to the rotatable rotor). The tip of the turbine blade may mean a tip of a blade body that extends from the shank. In this case, the vertices Pom#1, Prm#1 and Ptm#1 are closer to the tip of the turbine blade than the vertices Pom#2, Prm#2 and Ptm#2 are, the distance between the vertex Pom#1 and the vertex Prm#1 may be larger than the distance between the vertex Pom#2 and the vertex Prm#2.

In a case where the deformation model TM is generated, a file (for example, a CAD file that indicates the CAD data, the same applies to this paragraph) may include the deformation model TM that is assembly information and the object model OM that is the assembly information. The file may include the reference model RM that is the assembly information in addition to the deformation model TM that is the assembly information and the object model OM that is the assembly information. The file may include the difference model DM that is the assembly information in addition to the deformation model TM that is the assembly information, the object model OM that is the assembly information, and the reference model RM that is the assembly information.

Alternatively, the file (for example, the CAD file indicating the CAD data, the same applies to this paragraph) may include at least one of the object model OM, the reference model RM, the deformation model TM, and the difference model DM in an information format that is different from an information format of the assembly information. Alternatively, at least one of a file including the object model OM, a file including the reference model RM, a file including the deformation model TM, and a file including the difference model DM may be stored in the storage apparatus 222 or the like. Namely, the object model OM, the reference model RM, the deformation model TM, and the difference model DM may be included in separate files, respectively. In this case, a management file that includes information indicating that at least two of the file including the object model OM, the file including the reference model RM, the file including the deformation model TM, and the file including the difference model DM are associated with each other may be stored in the storage apparatus 222 or the like.

Again in FIG. 12, after the deformation model TM is generated, the control information generation unit 2211 generates the difference model DM (a step S5). In the present example embodiment, the control information generation unit 2211 generates the difference model DM based on the object model OM generated (acquired) at the step S2 and the deformation model TM generated at the step S4. Specifically, the control information generation unit 2211 may generate, as the difference model DM, a three-dimensional model corresponding to a difference between the deformation model TM and the object model OM. The difference model DM is typically the three-dimensional model corresponding to a part of the deformation model TM. Incidentally, FIG. 16(a) schematically illustrates the reference model RM in a case where the workpiece W is deformed due to the use of the workpiece, FIG. 16(b) schematically illustrates the object model OM in a case where the workpiece W is deformed due to the use of the workpiece, and FIG. 16(c) schematically illustrates the difference model DM that is generated based on the reference model RM illustrated in FIG. 16(a) and the object model OM illustrated in FIG. 16(b).

As a result, as illustrated in FIG. 16(c), the difference model DM, which corresponds to the difference between the deformation model TM and the object model OM, is closer to the three-dimensional shape of the three-dimensional structural object ST that should be built by the processing apparatus 1, compared to the three-dimensional shape indicated by the difference model DM (see FIG. 11(c)), which corresponds to the difference between the reference model RM and the object model OM. For example, the difference model DM (see FIG. 16(c)), which corresponds to the difference between the deformation model TM and the object model OM, is closer to the three-dimensional shape of the lost part of the workpiece W, compared to the three-dimensional shape indicated by the difference model DM (see FIG. 11(c)), which corresponds to the difference between the reference model RM and the object model OM. Typically, the difference model DM (see FIG. 16(c)), which corresponds to the difference between the deformation model TM and the object model OM, indicates the three-dimensional shape that is the same as the three-dimensional shape of the three-dimensional structural object ST that should be built by the processing apparatus 1 performing the additive manufacturing. For example, the difference model DM (see FIG. 16(c)), which corresponds to the difference between the deformation model TM and the object model OM, indicates the three-dimensional shape that is the same as the three-dimensional shape of the lost part of the workpiece W.

Thus, an accuracy of the difference model DM is improved in the present example embodiment. Namely, the difference model DM appropriately indicates the three-dimensional shape of the three-dimensional structural object ST that should be built by the processing apparatus 1 so that the three-dimensional shape of the workpiece W becomes the target shape. Specifically, the difference model DM appropriately indicates the three-dimensional shape of the three-dimensional structural object ST that should be built by the processing apparatus 1 so that the three-dimensional shape of the deformed workpiece W becomes the target shape that has been appropriately modified in accordance with the deformation of the workpiece W. Namely, the difference model DM appropriately indicates the three-dimensional shape of a processing part that is necessary for making the three-dimensional shape of the workpiece W become the target shape.

The control information generation apparatus 22 may control the output apparatus 225, which is configured to serve as the display apparatus, to display the deformation model TM generated at the step S5. The control information generation apparatus 22 may control the output apparatus 225, which is configured to serve as the display apparatus, to display at least two of the reference model RM, the object model OM, and the deformation model TM. The user of the processing system SYST may use the input apparatus 224 to operate the deformation model TM displayed on the output apparatus 225. For example, the user may use the input apparatus 224 to perform an operation for changing a display aspect of the deformation model TM displayed on the output apparatus 225. For example, the user may use the input apparatus 224 to perform an operation for rotating the deformation model TM displayed on the output apparatus 225. As another example, the user may use the input apparatus 224 to perform an operation for changing a display size of the deformation model TM displayed on the output apparatus 225.

Then, the control information generation unit 2211 generates the processing control information based on the difference model DM generated at the step S5 (a step S6). For example, the control information generation unit 2211 may generate the plurality of slice data, which correspond to the plurality of structural layers SL included in the three-dimensional structural object ST, respectively, by performing the slicing process for dividing the difference model DM into the plurality of layered models with the layered pitch corresponding to the thickness of the structural layer SL. Then, the control information generation unit 2211 may generate the plurality of pieces of processing control information, which are used to build the plurality of structural layers SL, respectively, based on the plurality of slice data.

As a result, the processing apparatus 1 is able to build the three-dimensional structural object ST having the desired shape. For example, the processing apparatus 1 is able to build the three-dimensional structural object ST that is able to appropriately filling in the lost part. Thus, even in a case where the workpiece W is deformed due to the use of the workpiece W, the measurement system 2 (especially, the control information generation apparatus 22) is able to generate the processing control information for controlling the processing apparatus 1 to build the three-dimensional structural object ST having the desired shape.

An operation for building the three-dimensional structural object ST may be considered to be equivalent to an operation for building the three-dimensional structural object ST, whose three-dimensional shape is indicated by the difference model DM, on the workpiece W, whose three-dimensional shape is indicated by the object model OM. In this case, the control apparatus 17 of the processing apparatus 1 may control the processing apparatus 1 to build the three-dimensional structural object ST, whose three-dimensional shape is indicated by the difference model DM, on the workpiece W, whose three-dimensional shape is indicated by the object model OM.

The control apparatus 17 may perform the control information generation operation illustrated in FIG. 12, in addition to or instead of the control information generation apparatus 22. Namely, the control apparatus 17 may generate the deformation model TM by deforming the reference model RM based on the object model OM, and may generate the difference model DM based on the deformation model TM and the object model OM. Alternatively, the control apparatus 17 (alternatively, the control information generation apparatus 22) may deform a three-dimensional model, which indicates a three-dimensional structure of the three-dimensional structural object ST that should be formed on the undeformed workpiece W, based on the object model OM that indicates the three-dimensional shape of the deformed workpiece W to generate the deformed three-dimensional model as the difference model DM. An operation for deforming the three-dimensional model of the three-dimensional structural object ST based on the object model OM may be the same as an operation for deforming the reference model RM based on the object model OM. Namely, the control apparatus 17 (alternatively, the control information generation apparatus 22) may deform the three-dimensional model of the three-dimensional structural object ST by performing an alignment of the three-dimensional model of the three-dimensional structural object ST and the object model OM, then setting each vertex of the three-dimensional model of the three-dimensional structural object ST to one of a control vertex, a dependent vertex, and a fixed vertex, and then moving the control vertex and the dependent vertex.

The control apparatus 17 (alternatively, the control information generation apparatus 22, the same applies to this paragraph) may use, as the three-dimensional model of the three-dimensional structural object that should be formed on the undeformed workpiece W, the slice data that is acquired by performing the slicing process, which is for dividing this three-dimensional model with the layered pitch corresponding to the thickness of the structural layer SL, on the three-dimensional model. Alternatively, the control apparatus 17 may use slice data that is acquired by performing the slicing processing on the three-dimensional model that is acquired by deforming the three-dimensional model of the three-dimensional structural object ST based on the object model OM, as described above. The slice data may include data (file) indicating the G-code. In this case, the control apparatus 17 may generate the difference model DM based on the slice data and at least one of the object model OM, the reference model RM, and the deformation model TM. The control apparatus 17 may generate the processing control information based on the slice data and at least one of the object model OM, the reference model RM, and the deformation model TM. The control apparatus 17 may control the processing apparatus 1 to build the three-dimensional structural object ST on the workpiece W based on the slice data and at least one of the object model OM, the reference model RM, and the deformation model TM. In a case where the slice data includes the data (the file) indicating the G-code, the control apparatus 17 may edit the G-code to build the three-dimensional structural object ST on the workpiece W. For example, the control apparatus 17 may align the data of the G-code to build the three-dimensional structural object ST on the workpiece W.

### (2-2-4) Operation for Generating Deformation Model TM by Deforming Reference Model RM

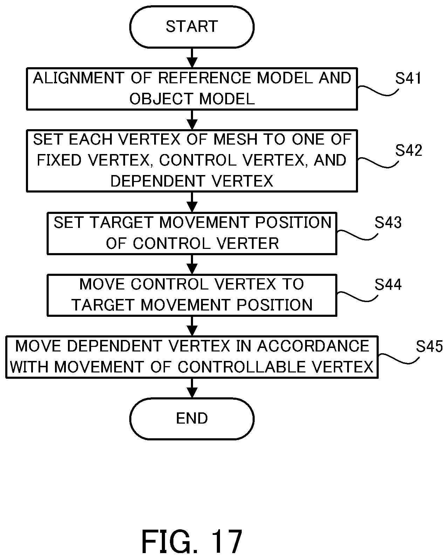

Next, with reference to FIG. 17, an operation of generating the deformation model TM by deforming the reference model RM at the step S4 in FIG. 12 will be described. FIG. 17 is a flowchart that illustrates a flow of the operation of generating the deformation model TM by deforming the reference model RM at the step S4 in FIG. 12.

In the below-described description, an operation for generating the deformation model TM by deforming the reference model RM using Laplacian Coordinates Representation will be described as one specific example of the operation for generating the deformation model TM by deforming the reference model RM. Therefore, FIG. 17 illustrates the flow of the operation for generating the deformation model TM by deforming the reference model RM using a Laplacian Coordinates Representation. In this case, deforming the reference model RM may be referred to as a Laplacian deformation. However, the control information generation apparatus 22 may deform the reference model RM by performing an operation that is different from the operation illustrated in FIG. 17 to generate the deformation model TM.

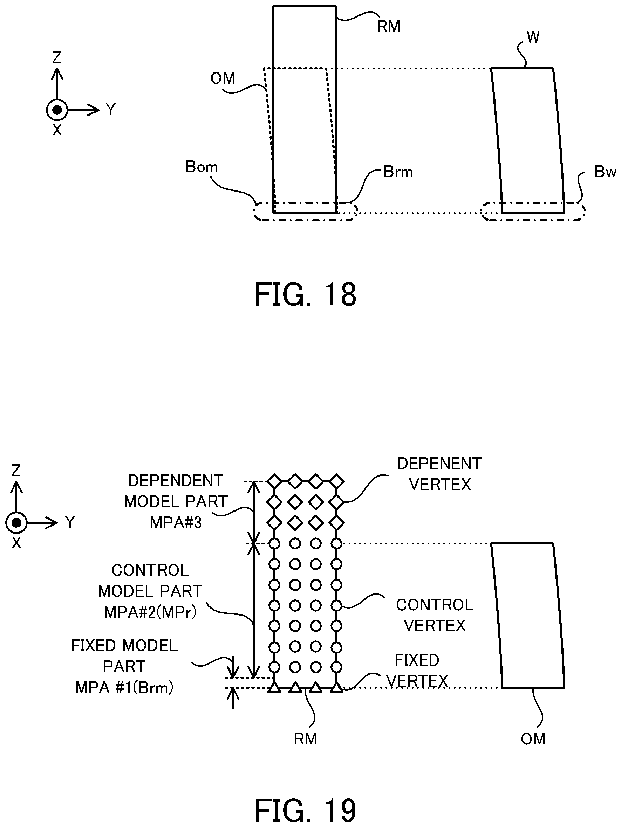

As illustrated in FIG. 17, the control information generation unit 2211 performs an alignment of the reference model RM and the object model OM (a step S41). FIG. 18 illustrates one example of the alignment of the reference model RM and the object model OM. As illustrated in FIG. 18, the control information generation unit 2211 may perform the alignment of the reference model RM and the object model OM so that a base part Brm of the reference model RM coincides with a base part Bom of the object model OM. Namely, the control information generation unit 2211 may perform the alignment of the reference model RM and the object model OM so that the base part Brm of the reference model RM and the base part Bom of the object model OM are positioned at the same position. The base part Brm of the reference model RM may be a model part of the reference model that indicates a base part Bw of the workpiece W. The base part Bom of the object model OM may be a model part of the object model OM that indicates the same base part Bw of the workpiece W. Namely, the base part Bom of the object model OM may be a model part of the object model OM that corresponds to the base part Brm of the reference model RM.

Incidentally, since the reference model RM is the mesh model (namely, includes the plurality of meshes that form the surface of the reference model RM), the base part Brm of the surface of the reference model RM may be used as the base part Brm of the reference model RM. Similarly, since the object model OM is the mesh model (namely, includes the plurality of meshes that form the surface of the object model OM), the base part Bom of the surface of the object model OM may be used as the base part Bom of the object model OM.

The base part Bw of the workpiece may include a part at which the deformed amount due to the use of the workpiece W is equal to or smaller than an allowable amount. The base part Bw of the workpiece may include a part that is not deformed due to the use of the workpiece W. The base part Bw of the workpiece may be a part to which the jig used to place the workpiece W on the stage 131 is attached. The base part Bw of the workpiece may be a predetermined part.

In order to perform the alignment of the reference model RM and the object model OM, the control information generation unit 2211 may use an existing alignment method. An alignment method using a RANSAC (Random Sample Consensus) is one example of the existing alignment method. An alignment method using a SIFT (Scale-Invariant Feature Transform) is another example of the existing alignment method. An alignment method using a ICP (Iterative Closest Point) is another example of the existing alignment method. An alignment method using a DSO (Direct Sparse Odometry) is another example of the existing alignment method.

The control information generation unit 2211 may perform the alignment of the reference model RM and the object model OM based on an instruction of the user of the processing system SYS. Specifically, the user may use the input apparatus 224 to input, to the control information generation apparatus 22, an instruction for performing the alignment of the reference model RM and the object model OM. In this case, the output apparatus 225, which is configured to serve as the display apparatus, may display the reference model RM and the object model OM. The user may perform the alignment of the reference model RM and the object model OM by moving at least one of the reference model RM and the object model OM displayed on the output apparatus 225 by using the input apparatus 224.

Again in FIG. 17, in parallel with, before, or after the operation at the step S41, the control information generation unit 2211 sets each vertex of each mesh of the reference model RM, which is the mesh model, to one of the fixed vertex, the control vertex, and the dependent vertex (a step S42).

For example, the control information generation unit 2211 may set each vertex of the reference model RM to one of the fixed vertex, the controlled vertex, and the dependent vertex based on an instruction of the user of the processing system SYS. Specifically, the user may use the input apparatus 224 to input, to the control information generation apparatus 22, an instruction for setting each vertex of the reference model RM to one of the fixed vertex, the control vertex, and the dependent vertex. In this case, the output apparatus 225, which is configured to serve as the display apparatus, may display the reference model RM. The user may set each vertex of the reference model RM to one of the fixed vertex, the control vertex, and the dependent vertex on the reference model RM displayed on the output apparatus 225 by using the input apparatus 224. In this case, considering that the reference model RM is deformed by moving the control vertex and the dependent vertex as described later, the user may be considered to set a deformed part of the reference model RM.

Alternatively, for example, the control information generation unit 2211 may automatically set each vertex of the reference model RM to one of the fixed vertex, the control vertex, and the dependent vertex, based on a predetermined vertex setting condition, without using the instruction of the user.

The fixed vertex corresponds to a vertex that does not move when the reference model RM is deformed to generate the deformation model TM. The fixed vertex may be a vertex that is used as a non-ROI (non-Region Of Interest), for example.

As illustrated in FIG. 19 that illustrates one example of the reference model RM in which each vertex is set to one of the fixed vertex, the control vertex, and the dependent vertex, in the example embodiment, an example in which the control information generation unit 2211 sets the vertex included in the base part Brm of the reference model RM to the fixed vertex will be described. In this case, as illustrated in FIG. 19, the base part Brm of the reference model RM may be regarded as a fixed model part MPA#1 of the reference model RM that should not be deformed.

The control vertex corresponds to a vertex that moves when the reference model RM is deformed to generate the deformation model TM. Especially, the control vertex is a vertex for which a target movement position, to which the control vertex should move, is set. Therefore, the control vertex moves to the set target movement position when the reference model RM is deformed to generate the deformation model TM. Incidentally, in a case where the target movement position is set, a movement distance and a movement direction of the control vertex are effectively set. Therefore, the control vertex may be regarded as a vertex whose movement distance and the movement direction are set.

As illustrated in FIG. 19, in the present example embodiment, an example in which the control information generation unit 2211 sets a vertex, which is included in at least a part of the corresponding model part MPr of the reference model RM that corresponds to the object model OM, to the control vertex will be described. In this case, as illustrated in FIG. 19, at least a part of the corresponding model part MPr of the reference model RM may be regarded as a control model part MPA#2 of the reference model RM that should be deformed by moving the control vertex.

The dependent vertex corresponds to a vertex that is moved when the reference model RM is deformed to generate the deformation model TM, as with the control vertex. The dependent vertex is a vertex for which the target movement position, to which the dependent vertex should move, is not set, compared to the control vertex. The dependent vertex may be regarded a vertex whose movement distance and the movement direction are not set. In this case, the dependent vertex moves in accordance with the movement of the control vertex. Namely, the dependent vertex moves passively as a result of the deformation of the reference model RM caused by the movement of the control vertex. In this case, the dependent vertex may be regarded as a vertex that moves by a movement distance that is determined based on the movement of the control vertex. The dependent vertex may be regarded as a vertex that moves in the movement direction that is determined based on the movement of the control vertex. Incidentally, the dependent vertex may be a vertex that is used as a ROI (Region Of Interest), for example.

As illustrated in FIG. 19, in the present example embodiment, an example in which the control information generation unit 2211 sets a vertex, which is included in a dependent model part MPA#3 of the reference model RM that is different from the fixed model part MPA#1 and the control model part MPA#2, to the dependent vertex will be described.

Incidentally, the control information generation unit 2211 may set all of the vertices, which are included in the reference model RM, to one of the fixed vertex, the control vertex, and the dependent vertex one by one. Alternatively, the control information generation unit 2211 may set two or more of the vertex, which is included in the reference model RM, to one of the fixed vertices, the control vertices, and the dependent vertices collectively. For example, the control information generation unit 2211 may designate a model part corresponding to a part of the reference model RM, and may set two or more of the vertex, which is included in the designated model part, to one of the fixed vertices, the control vertices, and the dependent vertices collectively. As a result, a processing load required to set each of the plurality of vertices to one of the fixed vertex, the control vertex, and the dependent vertex is reduced, compared to a case where all of the plurality of vertices are set to one of the fixed vertex, the control vertex, and the dependent vertex.

Again in FIG. 17, then, the control information generation unit 2211 sets the target movement position of the control vertex (a step S43). Namely, the control information generation unit 2211 sets the target movement position of the vertex of the reference model RM that has been set to the control vertex at the step S42 (the step S43). For example, the control information generation unit 2211 may set the target movement position of the control vertex so that the movement of the control vertex to the target movement position decreases a difference between the control model part MPA#2 (see FIG. 19) and the object model OM. Namely, the control information generation unit 2211 may set the target movement position of the control vertex so that the movement of the control vertex to the target movement position decreases a difference between a three-dimensional shape of the control model part MPA#2 that is a part of the surface of the reference model RM and a three-dimensional shape of a model part of the surface the object model OM that corresponds to the control model part MPA#2.

The control information generation unit 2211 may set the target movement position of the control vertex in the model part of the surface the object model OM that corresponds to the control model part MPA#2 in order to decrease the difference between the control model part MP#2 and the object model OM. In this case, the control information generation unit 2211 may extract the model part of the object model OM that corresponds to the control model part MPA#2 from the object model OM, and set the target movement position in the extracted model part.

The control information generation unit 2211 may set the target movement position of the control vertex based on an instructions of the user of the processing system SYS. Specifically, the user may use the input apparatus 224 to input, to the control information generation apparatus 22, an instruction for setting the target position. In this case, the output apparatus 225, which is configured to serve as the display apparatus, may display the reference model RM. The user may use the input apparatus 224 to set the target movement position for the reference model RM displayed on the output apparatus 225. In this case, the user may be considered to set the deformed amount of the reference model RM.

The control information generation unit 2211 may determine based on the target movement position set at the step S43 whether or not it is possible to generate the deformation model TM. For example, considering that the control vertex moves to the target movement position, it can be said that an operation for setting the target movement position is equivalent to an operation for setting the movement distance of the control vertex. Here, the movement distance of the control vertex should be larger as the deformed amount of the workpiece W is larger. In this case, in a case where the deformed amount of the workpiece W is equal to or larger than an allowable deformed amount, there is a possibility that the three-dimensional shape of the repaired workpiece W is greatly different from an expected three-dimensional shape even in a case where the workpiece W is repaired by building the three-dimensional structural object ST on the workpiece W. Namely, there is a possibility that it is difficult to say that the workpiece W has been repaired appropriately. Therefore, the control information generation unit 2211 may determine whether or not it is possible to generate the deformation model TM by determining based on the target movement position whether or not the movement distance of at least one control vertex is equal to or larger than an allowable movement distance. For example, the control information generation unit 2211 may determine that it is not possible to generate the deformation model TM in a case where the movement distance of at least one control vertex is equal to or larger than the allowable movement distance.

In a case where it is determined that it is not possible to generate the deformation model TM, the control information generation apparatus 22 may use the output apparatus 225 to output notification information to inform the user of the processing system SYS that it is not possible to generate the deformation model TM. For example, the control information generation apparatus 22 may use the output apparatus 225, which is configured to serve as the display apparatus, to display a notification image to inform the user that it is not possible to generate the deformation model TM.

In a case where it is determined that it is not possible to generate the deformation model TM, the control information generation apparatus 22 may control the control information generation unit 2211 so as not to generate the processing control information, in addition to or instead of outputting the notification information to inform the user that it is not possible to generate the deformation model TM. The control information generation apparatus 22 may control the communication apparatus 223 so as not to transmit the processing control information to the processing apparatus 1, in addition to or instead of outputting the notification information.

Then, the control information generation unit 2211 generates the deformation model TM by deforming the reference model RM (a step S44 to a step S45).

Specifically, the control information generation unit 2211 moves the control vertex to the target movement position in a state where the alignment of the reference model RM and the object model OM has been performed (the step S44). Namely, the control information generation unit 2211 moves the vertex of the reference model RM, which is set to the control vertex at the step S42, to the target movement position, which is set at the step S43 (the step S44).

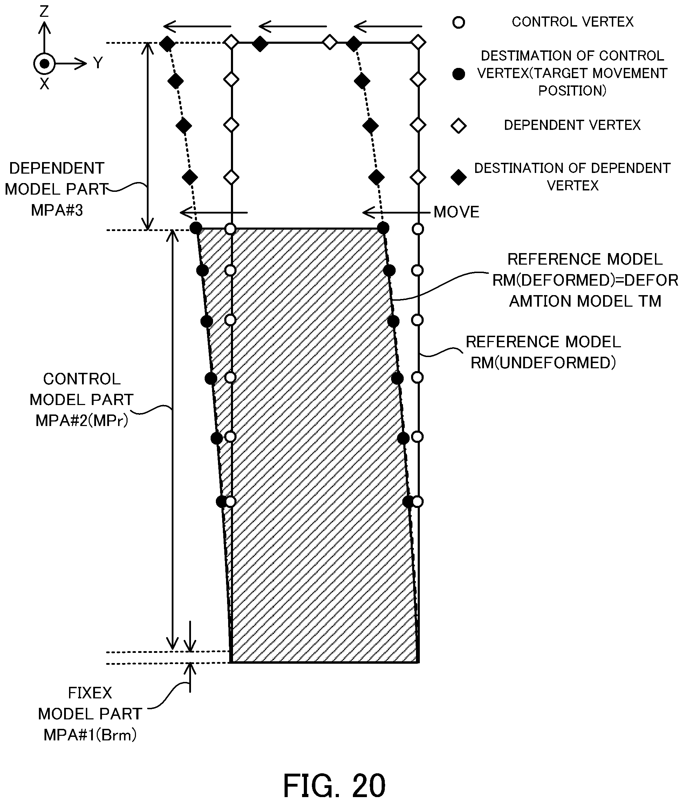

As a result, as illustrated in FIG. 20 that schematically illustrates the undeformed reference model RM and the deformed reference model RM, the control model part MPA#2 of the reference model RM is deformed in accordance with the movement of the control vertex. Namely, the three-dimensional shape of the control model part MPA#2 of the reference model RM is changed. Specifically, the control model part MPA#2 of the reference model RM is deformed so that the control model part MPA#2 of the reference model RM moves to a position of the model part of the object model OM that corresponds to the control model part MPA#2. Therefore, an operation for moving the control vertex may be considered to be equivalent to an operation for deforming the control model part MPA#2 of the reference model RM. An operation of moving the control vertex to the target movement position may be considered to be equivalent to an operation for deforming the control model part MPA#2 of the reference model RM so that the control model part MPA#2 of the object model OM moves to the position of the model part of the object model OM that corresponds to the control model part MPA#2.

Furthermore, the control information generation unit 2211 moves the dependent vertex in accordance with the movement of the control vertex (the step S45). Namely, the control information generation unit 2211 moves the vertex of the reference model RM, which is set to the dependent vertex at the step S42, in accordance with the movement of the control vertex at the step S44 (the step S45). For example, the control information generation unit 2211 may move the dependent vertex in accordance with the movement of the control vertex by performing a Mesh Deformation.

As a result, as illustrated in FIG. 20 that schematically illustrates the undeformed reference model RM and the deformed reference model RM, the dependent model part MPA#3 of the reference model RM is deformed in accordance with the movement of the dependent vertex. Namely, the three-dimensional shape of the dependent model part MPA#3 of the reference model RM is changed. In this case, it can be said that the dependent model part MPA#3 of the reference model RM is deformed in accordance with the deformation of the control model part MPA#2 of the reference model RM.

Incidentally, the control information generation unit 2211 may move the control vertex based on an instruction of the user of the processing system SYS. Specifically, the user may use the input apparatus 224 to input, to the control information generation apparatus 22, an instruction for moving the control vertex. In this case, the output apparatus 225, which is configured to serve as the display apparatus, may display the reference model RM. Especially, the output apparatus 225, which is configured to serve as the display apparatus, may display the control vertex of the reference model RM. The user may use the input apparatus 224 to move the control vertex displayed on the output apparatus 225. In this case, the user may be considered to be set the deformed amount of the reference model RM.

The control information generation unit 2211 may move the dependent vertex based on an instruction of the user of the processing system SYS. Specifically, the user may use the input apparatus 224 to input, to the control information generation apparatus 22, an instruction for moving the dependent vertex. In this case, the output apparatus 225, which is configured to serve as the display apparatus, may display the reference model RM. Especially, the output apparatus 225, which is configured to serve as the display apparatus, may display the dependent vertex of the reference model RM. The user may use the input apparatus 224 to move the dependent vertex displayed on the output apparatus 225. In this case, the user may be considered to be set the deformed amount of the reference model RM.

On the other hand, as illustrated in FIG. 20, the control information generation unit 2211 does not move the fixed vertex. Namely, a position of the fixed vertex is fixed even when the control vertex and the dependent vertex move.

As a result, as illustrated in FIG. 20, the deformed reference model RM is generated as the deformation model TM. In this case, as can be seen from FIG. 16 and FIG. 20, the difference model DM generated from the deformation model TM may typically include at least a part of the deformed dependent model part MPA#3.

In a case where the file that includes the reference model RM as the assembly information is generated, the file may include deformation information related to the deformation of the reference model RM. The information related to the deformation of the reference model RM may include information related to at least one of the control vertex, the dependent vertex, and the fixed vertex. The information related to the control vertex may include information related to a position of the control vertex. The information related to the control vertex may include information related to the movement of the control vertex. The information related to the movement of the control vertex may include information related to at least one of the movement distance and the movement direction of the control vertex. The information related to the dependent vertex may include information related to a position of the dependent vertex. The information related to the dependent vertex may include information related to the movement of the dependent vertex. The information related to the movement of the dependent vertex may include information related to at least one of the movement distance and the movement direction of the dependent vertex. The information related to the fixed vertex may include information related to a position of the fixed vertex. In this case, the control information generation unit 2211 may generate the deformation model TM by using the deformation information included in the file to deform the reference model RM. As a result, the control information generation unit 2211 may easily regenerate the deformation model TM that is the same as the deformation model TM that has been generated in the past.

However, the reference model RM and the deformation information may be included in separate files, respectively. In this case, a management file that includes information indicating that the file including the reference model RM and the file including the deformation information are associated with each other may be stored in the storage apparatus 222 or the like.

The control information generation apparatus 22 may generate the processing control information for processing a second workpiece W that is different from a first workpiece W by using the deformation information that is generated to generate the processing control information for processing the first workpiece W. For example, the control information generation apparatus 22 may deform the reference model RM of the second workpiece W by using the deformation information related to the deformation of the reference model RM of the first workpiece W. In this case, the control information generation apparatus 22 may not set the target movement position of the control vertex of the reference model RM of the second workpiece W. As a result, a processing load of the control information generation apparatus 22 is reducible. This operation is especially effective in a case where the deformed amount of the first workpiece W is similar with the deformed amount of the second workpiece W.

### (3) Technical Effect

As described above, the processing system SYS in the present example embodiment uses, as the three-dimensional model that indicates the target shape of the workpiece W, the deformation model TM that reflects the deformation of the workpiece W, instead of the reference model RM that does not reflect the deformation of the workpiece W. Therefore, the three-dimensional shape indicated by the difference model DM generated based on the deformation model TM (see FIG. 15(b)) is closer to the three-dimensional shape of the three-dimensional structural object ST that should be built by the processing apparatus 1, compared to the three-dimensional shape indicated by the difference model DM generated based on the reference model RM (see FIG. 11(c)). Therefore, even in a case where the workpiece W is deformed due to the use of the workpiece W, the measurement system 2 (especially, the control information generation apparatus 22) is able to generate the processing control information for controlling the processing apparatus 1 to build the three-dimensional structural object ST having the desired shape. Namely, the control information generation apparatus 22 is able to generate the processing control information in which an effect of the deformation of the workpiece W is reduced or cancelled. As a result, the processing apparatus 1 is able to build the three-dimensional structural object ST having the desired shape.

Here, the deformed amount of one part of the workpiece W may be different from the deformed amount of another part of the workpiece W in a case where the workpiece W is deformed, as described above. As one example, in a case where the workpiece W is the turbine blade, the deformed amount of one part of the turbine blade generally becomes larger as the one part is closer to the tip of the turbine blade, as described above. In this case, the control information generation apparatus 22 may generate the processing control information that reduces or cancels the effects of not only the deformation at the base of the turbine blade, which is relatively small, but also the deformation at the tip of the turbine blade, which is relatively large. Here, because the tip of the turbine blade is worn, the processing apparatus 1 builds the build object at the tip of the turbine blade. Therefore, the control information generation apparatus 22 may generate the processing control information that appropriately reduces or cancels the effect of the deformation at a part of the turbine blade at which the processing apparatus should build the build object. As a result, the processing apparatus 1 is able to appropriately build the three-dimensional structural object ST that has the desired shape and that is able to appropriately fill in the lost part of the turbine blade.

In addition, the processing system SYS in the present example embodiment may generate the deformation model TM by deforming the reference model RM. Especially, the processing system SYS may generate the deformation model TM by moving the control vertex and the dependent vertex of the reference model RM. Since the control vertex and dependent vertex are positioned on the surface (especially, the surface that includes a side surface) of the reference model RM, the processing system SYS may deform the reference model RM, which has the side surface corresponding to a side surface of the workpiece W, based on the object model OM that reflects the deformation of the side surface of the workpiece W. Therefore, the processing system SYS is able to appropriately deform (for example, bend) the side surface of the reference model RM in accordance with the deformation of the side surface of the workpiece W. As a result, the processing system SYS is able to appropriately generate the deformation model TM (furthermore, the difference model DM) that appropriately reflects the deformation of the side surface of the workpiece W.

### (4) Modified Example

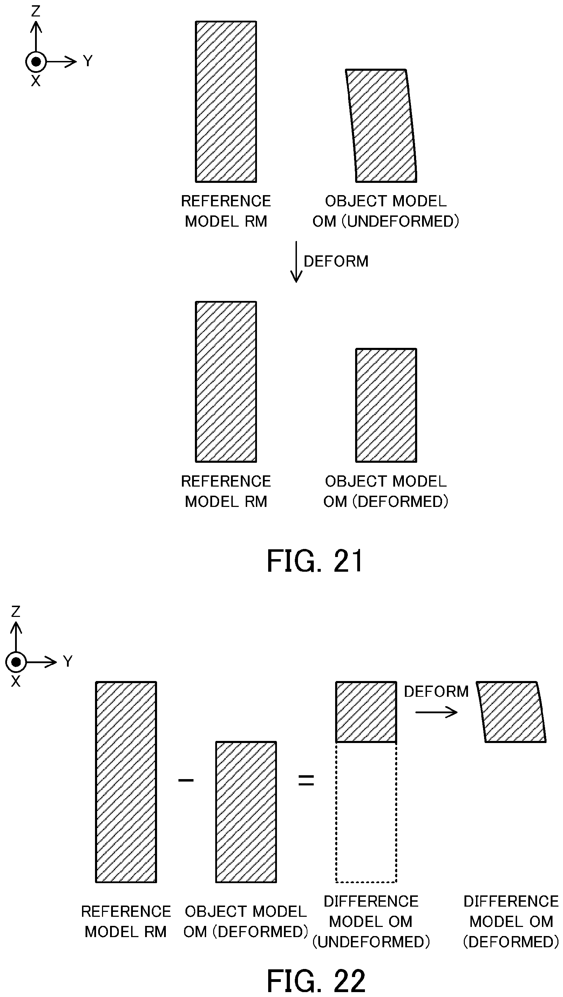

In the above-described description, the measurement system 2 (especially, the control information generation apparatus 22) deforms the reference model RM based on the object model OM in order to generate the deformation model TM. However, as illustrated in FIG. 21, the control information generation apparatus 22 may deform the object model OM based on the reference model RM in order to generate the deformation model TM. Incidentally, an operation for deforming the object model OM based on the reference model RM may be the same as the operation for deforming the reference model RM based on the object model OM. Namely, the control information generation apparatus 22 may deform the object model OM by performing the alignment of the reference model RM and the object model OM, then setting each vertex of the object model OM to one of the control vertex, the dependent vertex, and then the fixed vertex, and moving the control vertex and dependent vertex. Then, as illustrated in FIG. 22, the control information generation apparatus 22 may generate, as the difference model DM, a three-dimensional model corresponding to a difference between the reference model RM and the deformed object model OM. Then, as illustrated in FIG. 22, the difference model DM that reflects the deformation of the workpiece W may be generated by deforming the difference model DM based on the object model OM (namely, the undeformed object model OM) that reflects the deformation of the workpiece W. Incidentally, an operation for deforming the difference model DM based on the object model OM may be the same as the operation of deforming the reference model RM based on the object model OM. Namely, the control information generation apparatus 22 may deform the difference model DM by performing the alignment of the difference model DM and the object model OM, then setting each vertex of the difference model DM to one of the control vertex, the dependent vertex, and the fixed vertex, and then moving the control vertex and dependent vertex.

In the above-described description, the measurement system 2 (especially, the control information generation apparatus 22) generates the deformation model TM based on the object model OM and the reference model RM, and generates the difference model DM based on the deformation model TM. However, the control information generation apparatus 22 may generate the difference model DM without generating the deformation model TM.

As one example, the control information generation apparatus 22 may predict, based on the object model OM and the reference model RM, the deformed amount of the three-dimensional structural object ST due to the deformation of the workpiece W, and generate, as the difference model DM, a three-dimensional model that indicates the three-dimensional shape of the three-dimensional structural object ST reflecting the predicted deformed amount. In this case, the control information generation apparatus 22 may predict the deformed amount of the three-dimensional structural object ST by using an arithmetic model that is buildable by a machine learning. The arithmetic model may be a model that outputs the deformed amount of the three-dimensional structural object ST due to the deformation of the workpiece W when the object model OM and the reference model RM are input thereto. An arithmetic model that includes a neural network (so-called an artificial intelligence (AI)) is one example of the arithmetic model that is buildable by a machine learning. The machine learning of the arithmetic model may include a deep learning.

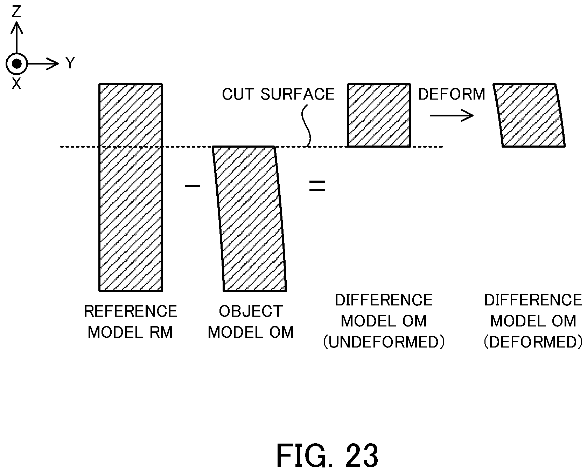

As another example, as illustrated in FIG. 23, the control information generation apparatus 22 may generate a difference model DM by cutting out the reference model RM along a cut surface that is set based on the object model OM. The cut surface may be a surface that defines the tip of the object model OM. The cut surface may be a surface that defines the tip of the object model OM that is farthest from the base part Brm of the object model OM. Then, as illustrated in FIG. 23, the difference model DM that reflects the deformation of the workpiece W may be generated by deforming the difference model DM based on the object model OM (namely, the undeformed object model OM) that reflects the deformation of the workpiece W. Incidentally, an operation for deforming the difference model DM based on the object model OM may be the same as the operation of deforming the reference model RM based on the object model OM. Namely, Namely, the control information generation apparatus 22 may deform the difference model DM by performing the alignment of the difference model DM and the object model OM, then setting each vertex of the difference model DM to one of the control vertex, the dependent vertex, and the fixed vertex, and then moving the control vertex and dependent vertex. In this case, the control information generation apparatus 22 may perform the alignment of a part of the difference model DM facing the cut surface and a part of the object model OM facing the cut surface. The control information generation apparatus 22 may set the vertex of the part of the difference model DM facing the cut surface to the control vertex.

In the above-described description, the measurement system 2 generates the processing control information. However, a control information generation apparatus that is different from the measurement system 2 may generate the processing control information. For example, the processing apparatus 1 (especially, the control apparatus 17 thereof), which is configured to serve as the control information generation apparatus, may generate the processing control information. For example, the control server 4, which is configured to serve as the control information generation apparatus, may generate the processing control information. For example, a control information generation apparatus that is different from the processing apparatus 1 and the control server 4 may generate the processing control information. For example, a control information generation apparatus that is configured to communicating with the processing apparatus 1 may generate the processing control information. For example, a control information generation apparatus that is configured to communicating with the control server 4 may generate the processing control information.

In a case where the control information generation apparatus that is different from the measurement system 2 generates the processing control information, the control information generation apparatus that is different from the measurement system 2 may further generate the deformation model TM from the reference model RM, and then generate the difference model DM based on the deformation model TM and the object model OM. In this case, the measurement system 2 may transmit the object model OM to the control information generation apparatus by using the communication apparatus 223. Moreover, the reference model RM may be stored in the control information generation apparatus.

In the above-described description, the processing apparatus 1 melts the build material M by irradiating the build material M with the processing light EL. However, the processing apparatus 1 may melt the build material M by irradiating the build material M with any energy beam. At least one of a charged particle beam, an electromagnetic wave and the like is one example of any energy beam. A least one of an electron beam, an ion beam and the like is one example of the charged particle beam.

### (5) Supplementary Note

Regarding the above-described example embodiment, below described Supplementary notes are further disclosed.

### [Supplementary Note 1]

A processing control information generation method including:
acquiring an object model that indicates a three-dimensional shape of an object;
generating a deformation model, which indicates a target shape of the object after a processing, by deforming a reference model of the object based on the object model;
generating a difference model that indicates a difference between the deformation model and the object model; and
generating, based on the difference model, processing control information for performing an additive manufacturing on the object so that the three-dimensional shape of the object becomes the target shape.

### [Supplementary Note 2]

The processing control information generation method according to Supplementary Note 1, wherein
the object model is generated by measuring the three-dimensional shape of the object.

### [Supplementary Note 3]

The processing control information generation method according to Supplementary Note 1 or 2, wherein
the reference model indicates a reference three-dimensional shape of the object that is different from the three-dimensional model.

### [Supplementary Note 4]

The processing control information generation method according to Supplementary Note 3, wherein
the reference model indicates a three-dimensional shape before the object is used.

### [Supplementary Note 5]

The processing control information generation method according to any one of Supplementary Notes 1 to 4, wherein
a difference between a part of the deformed reference model and the object model is smaller than a difference between a part of the undeformed reference model and the object model.

### [Supplementary Note 6]

The processing control information generation method according to any one of Supplementary Notes 1 to 5, wherein
the generating the deformation model includes deforming a first part of a surface of the reference model so as to decrease a difference between a three-dimensional shape of the first part and a three-dimensional shape of a second part, which corresponds to the first part, of a surface of the object model and deforming a three-dimensional shape of a third part, which is different from the first part, of the reference model in accordance with the deformation of the first part.

### [Supplementary Note 7]

The processing control information generation method according to any one of Supplementary Notes 1 to 6, wherein
the generating the deformation model includes performing a Laplacian deformation of the reference model.

### [Supplementary Note 8]

The processing control information generation method according to any one of Supplementary Notes 1 to 7, wherein
the generating the deformation model includes:
performing an alignment of the reference model and the object model so that a first reference model part of a surface of the reference model that should not be deformed coincides with a first object model part of a surface of the object model that corresponds to the first reference model part; and
deforming a second reference model part of the surface of the reference model that is different from the first reference model part so that the second reference model part moves to a position of a second object model part of the surface of the object model that corresponds to the second reference model part in a state where the alignment of the reference model and the object model has been performed.

### [Supplementary Note 9]

The processing control information generation method according to Supplementary Note 8, wherein
the generating the deformation model includes:
extracting the second object model part, which corresponds to the second reference model part, from the object model before the second reference model is deformed; and
the deforming the second reference model part that is deforming the second reference model part so that the second reference model part moves to a position of the extracted second object model part.

### [Supplementary Note 10]

The processing control information generation method according to Supplementary Note 8 or 9, wherein
the generating the deformation model includes:
deforming a third reference model part of the surface of the reference model, which is different from the first and second reference model part, in accordance with the deformation of the second reference model part in a state where the alignment of the reference model and the object model has been performed.

### [Supplementary Note 11]

The processing control information generation method according to Supplementary Note 10, wherein
the difference model includes at least a part of the third reference model part that has been deformed in accordance with the deformation of the second reference model part.

### [Supplementary Note 12]

The processing control information generation method according to any one of Supplementary Notes 8 to 11, wherein
each of the reference model and the object model is a polygonal mesh model.

### [Supplementary Note 13]

The processing control information generation method according to any one of Supplementary Notes 1 to 12, wherein
the processing method includes measuring the three-dimensional shape of the object,
the object model is generated based on a measured result of the three-dimensional shape of the object.

### [Supplementary Note 14]

The processing control information generation method according to any one of Supplementary Notes 1 to 13, wherein
the object includes a turbine blade.

### [Supplementary Note 15]

A processing method that performs the additive manufacturing by using the processing control information generation method according to any one of Supplementary Notes 1 to 14.

### [Supplementary Note 16]

A processing control information generation method including:
acquiring an object model that indicates a three-dimensional shape of an object;
generating a deformation model that indicates a target shape of the object after a processing and that is deformed based on the object model;
generating a difference model that indicates a difference between the deformation model and the object model; and
generating, based on the difference model, processing control information for performing an additive manufacturing on the object so that the three-dimensional shape of the object becomes the target shape.

### [Supplementary Note 17]

A processing control information generation method including:
generating a deformation model, which indicates a target shape of the object after a processing, by deforming a reference model of an object;
generating a difference model that is a part of the deformation model and that indicates a processing part necessary for making the three-dimensional shape of the object become the target shape; and
generating, based on the difference model, processing control information for performing an additive manufacturing on the object.

### [Supplementary Note 18]

A processing control information generation method including:
acquiring an object model that is generated by measuring a three-dimensional shape of an object;
generating a deformation model that indicates a target shape of the object after a processing, by deforming a reference model of the object based on the object model; and
generating, based on the object model and the deformation model, processing control information for performing an additive manufacturing on the object.

### [Supplementary Note 19]

A processing method that performs a processing by using the processing control information generation method according to any one of Supplementary Notes 1 to 19.

### [Supplementary Note 20]

A model generation method including:
acquiring an object information that indicates a three-dimensional shape of an object;
generating a deformation model, which indicates a target shape of the object after a processing, by deforming a reference model of the object based on the object information; and
generating a difference model that indicates a difference between the deformation model and the object model.

### [Supplementary Note 21]

A model generation method including:
acquiring a measured result of measuring a three-dimensional shape of an object;
generating a deformation model, which indicates a target shape of the object after a processing, by deforming a reference model of the object based on the measured result; and
generating a difference model that indicates a difference between the deformation model and the object model.

### [Supplementary Note 22]

A processing system including:
a processing apparatus that is configured to process an object; and
a control information generation apparatus that is configured to generate processing control information for controlling the processing apparatus to perform an additive manufacturing on the object,
wherein
the control information generation apparatus:
   acquires an object model that indicates a three-dimensional shape of an object;
   generates a deformation model, which indicates a target shape of the object after a processing, by deforming a reference model of the object based on the object model;
   generates a difference model that indicates a difference between the deformation model and the object model; and
   generates, based on the difference model, the processing control information for controlling the processing apparatus to perform the additive manufacturing on the object so that the three-dimensional shape of the object becomes the target shape.

### [Supplementary Note 23]

The processing system according to Supplementary Note 21, wherein
the object model is generated by measuring the three-dimensional shape of the object.

### [Supplementary Note 24]

The processing system according to Supplementary Note 22 or 23, wherein
the reference model indicates a reference three-dimensional shape of the object that is different from the three-dimensional model.

### [Supplementary Note 25]

The processing system according to Supplementary Note 24, wherein
the reference model indicates a three-dimensional shape before the object is used.

### [Supplementary Note 26]

The processing system according to any one of Supplementary Notes 22 to 25, wherein
a difference between a part of the deformed reference model and the object model is smaller than a difference between a part of the undeformed reference model and the object model.

### [Supplementary Note 27]

The processing system according to any one of Supplementary Notes 22 to 26, wherein
the control information generation apparatus generates the deformation model by deforming a first part of a surface of the reference model so as to decrease a difference between a three-dimensional shape of the first part and a three-dimensional shape of a second part, which corresponds to the first part, of a surface of the object model and deforming a three-dimensional shape of a third part, which is different from the first part, of the reference model in accordance with the deformation of the first part.

### [Supplementary Note 28]

The processing system according to any one of Supplementary Notes 22 to 27, wherein
the control information generation apparatus generates the deformation model by performing a Laplacian deformation of the reference model.

### [Supplementary Note 29]

The processing system according to any one of Supplementary Notes 22 to 28, wherein
the control information generation apparatus generates the deformation model by:
performing an alignment of the reference model and the object model so that a first reference model part of a surface of the reference model that should not be deformed coincides with a first object model part of a surface of the object model that corresponds to the first reference model part; and
deforming a second reference model part of the surface of the reference model that is different from the first reference model part so that the second reference model part moves to a position of a second object model part of the surface of the object model that corresponds to the second reference model part in a state where the alignment of the reference model and the object model has been performed.

### [Supplementary Note 30]

The processing system according to Supplementary Note 29, wherein
the control information generation apparatus generates the deformation model by:
extracting the second object model part, which corresponds to the second reference model part, from the object model before the second reference model is deformed; and
deforming the second reference model part that is deforming the second reference model part so that the second reference model part moves to a position of the extracted second object model part.

### [Supplementary Note 31]

The processing system according to Supplementary Note 29 or 30, wherein
the control information generation apparatus generates the deformation model by
deforming a third reference model part of the surface of the reference model, which is different from the first and second reference model part, in accordance with the deformation of the second reference model part in a state where the alignment of the reference model and the object model has been performed.

### [Supplementary Note 32]

The processing system according to Supplementary Note 31, wherein
the difference model includes at least a part of the third reference model part that has been deformed in accordance with the deformation of the second reference model part.

### [Supplementary Note 33]

The processing system according to any one of Supplementary Notes 29 to 32, wherein
each of the reference model and the object model is a polygonal mesh model.

### [Supplementary Note 34]

The processing system according to any one of Supplementary Notes 22 to 33, wherein
the control information generation apparatus further measures the three-dimensional shape of the object,
the object model is generated based on a measured result of the three-dimensional shape of the object.

### [Supplementary Note 35]

The processing system according to any one of Supplementary Notes 22 to 34, wherein
the object includes a turbine blade.

### [Supplementary Note 36]

A processing system including:
a processing apparatus that is configured to process an object; and
a control information generation apparatus that is configured to generate processing control information for controlling the processing apparatus to perform an additive manufacturing on the object,
wherein
the control information generation apparatus:
   acquires an object model that indicates a three-dimensional shape of an object;
   generates a deformation model that indicates a target shape of the object after a processing and that is deformed based on the object model;
   generates a difference model that indicates a difference between the deformation model and the object model; and
   generates, based on the difference model, the processing control information for controlling the processing apparatus to perform the additive manufacturing on the object so that the three-dimensional shape of the object becomes the target shape.

### [Supplementary Note 37]

A processing system including:
a processing apparatus that is configured to process an object; and
a control information generation apparatus that is configured to generate processing control information for controlling the processing apparatus to perform an additive manufacturing on the object,
wherein
the control information generation apparatus:
   generates a deformation model, which indicates a target shape of the object after a processing, by deforming a reference model of an object;
   generates a difference model that is a part of the deformation model and that indicates a processing part necessary for making the three-dimensional shape of the object become the target shape; and
   generates, based on the difference model, the processing control information for controlling the processing apparatus to perform the additive manufacturing on the object.

### [Supplementary Note 38]

A processing system including:
a processing apparatus that is configured to process an object; and
a control information generation apparatus that is configured to generate processing control information for controlling the processing apparatus to perform an additive manufacturing on the object,
wherein
the control information generation apparatus:
   acquires an object model that is generated by measuring a three-dimensional shape of an object;
   generates a deformation model that indicates a target shape of the object after a processing, by deforming a reference model of the object based on the object model; and
   generating, based on the object model and the deformation model, the processing control information for controlling the processing apparatus to perform the additive manufacturing on the object.

### [Supplementary Note 39]

A processing method that performs a processing by using the processing system according to any one of Supplementary Notes 22 to 38.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing control information generation method, a processing method, a model generation method, and a processing system which involve such changes, are also intended to be within the technical scope of the present invention.

### Description of Reference Codes

- SYS: processing system
- 1: processing apparatus
- 2: measurement system
- 21: shape measurement apparatus
- 22: control information generation apparatus
- W: workpiece
- OM: object model
- RM: reference model
- TM: deformation model
- DM: difference model

## Claims

1. A processing control information generation method comprising:
acquiring an object model that indicates a three-dimensional shape of an object;
generating a deformation model, which indicates a target shape of the object after a processing, by deforming a reference model of the object based on the object model;
generating a difference model that indicates a difference between the deformation model and the object model; and
generating, based on the difference model, processing control information for performing an additive manufacturing on the object so that the three-dimensional shape of the object becomes the target shape.

2. The processing control information generation method according to claim 1, wherein
the object model is generated by measuring the three-dimensional shape of the object.

3. The processing control information generation method according to claim 1 or 2, wherein
the reference model indicates a reference three-dimensional shape of the object that is different from the three-dimensional model.

4. The processing control information generation method according to claim 3, wherein
the reference model indicates a three-dimensional shape before the object is used.

5. The processing control information generation method according to any one of claims 1 to 4, wherein
a difference between a part of the deformed reference model and the object model is smaller than a difference between a part of the undeformed reference model and the object model.

6. The processing control information generation method according to any one of claims 1 to 5, wherein
the generating the deformation model includes deforming a first part of a surface of the reference model so as to decrease a difference between a three-dimensional shape of the first part and a three-dimensional shape of a second part, which corresponds to the first part, of a surface of the object model and deforming a three-dimensional shape of a third part, which is different from the first part, of the reference model in accordance with the deformation of the first part.

7. The processing control information generation method according to any one of claims 1 to 6, wherein
the generating the deformation model includes performing a Laplacian deformation of the reference model.

8. The processing control information generation method according to any one of claims 1 to 7, wherein
the generating the deformation model includes:
performing an alignment of the reference model and the object model so that a first reference model part of a surface of the reference model that should not be deformed coincides with a first object model part of a surface of the object model that corresponds to the first reference model part; and
deforming a second reference model part of the surface of the reference model that is different from the first reference model part so that the second reference model part moves to a position of a second object model part of the surface of the object model that corresponds to the second reference model part in a state where the alignment of the reference model and the object model has been performed.

9. The processing control information generation method according to claim 8, wherein
the generating the deformation model includes:
extracting the second object model part, which corresponds to the second reference model part, from the object model before the second reference model is deformed; and
the deforming the second reference model part that is deforming the second reference model part so that the second reference model part moves to a position of the extracted second object model part.

10. The processing control information generation method according to claim 8 or 9, wherein
the generating the deformation model includes:
deforming a third reference model part of the surface of the reference model, which is different from the first and second reference model part, in accordance with the deformation of the second reference model part in a state where the alignment of the reference model and the object model has been performed.

11. The processing control information generation method according to claim 10, wherein
the difference model includes at least a part of the third reference model part that has been deformed in accordance with the deformation of the second reference model part.

12. The processing control information generation method according to any one of claims 8 to 11, wherein
each of the reference model and the object model is a polygonal mesh model.

13. The processing control information generation method according to any one of claims 1 to 12, wherein
the processing method includes measuring the three-dimensional shape of the object,
the object model is generated based on a measured result of the three-dimensional shape of the object.

14. The processing control information generation method according to any one of claims 1 to 13, wherein
the object includes a turbine blade.

15. A processing method that performs the additive manufacturing by using the processing control information generation method according to any one of claims 1 to 14.

16. A processing control information generation method comprising:
acquiring an object model that indicates a three-dimensional shape of an object;
generating a deformation model that indicates a target shape of the object after a processing and that is deformed based on the object model;
generating a difference model that indicates a difference between the deformation model and the object model; and
generating, based on the difference model, processing control information for performing an additive manufacturing on the object so that the three-dimensional shape of the object becomes the target shape.

17. A processing control information generation method comprising:
generating a deformation model, which indicates a target shape of the object after a processing, by deforming a reference model of an object;
generating a difference model that is a part of the deformation model and that indicates a processing part necessary for making the three-dimensional shape of the object become the target shape; and
generating, based on the difference model, processing control information for performing an additive manufacturing on the object.

18. A processing control information generation method comprising:
acquiring an object model that is generated by measuring a three-dimensional shape of an object;
generating a deformation model that indicates a target shape of the object after a processing, by deforming a reference model of the object based on the object model; and
generating, based on the object model and the deformation model, processing control information for performing an additive manufacturing on the object.

19. A processing method that performs a processing by using the processing control information generation method according to any one of claims 1 to 19.

20. A model generation method comprising:
acquiring an object information that indicates a three-dimensional shape of an object;
generating a deformation model, which indicates a target shape of the object after a processing, by deforming a reference model of the object based on the object information; and
generating a difference model that indicates a difference between the deformation model and the object model.

21. A model generation method comprising:
acquiring a measured result of measuring a three-dimensional shape of an object;
generating a deformation model, which indicates a target shape of the object after a processing, by deforming a reference model of the object based on the measured result; and
generating a difference model that indicates a difference between the deformation model and the object model.
